# EUROPÄISCHE PATENTSCHRIFT

(11) **EP 1 562 964 B1**
(45) Veröffentlichungstag und Bekanntmachung des Hinweises auf die Patenterteilung: **19.07.2006**
(21) Anmeldenummer: 03810433.7
(22) Anmeldetag: 04.11.2003
(51) Int. Cl.: C07F 15/00

(54) **PALLADIUM- UND PLATIN-KOMPLEXE**
PALLADIUM AND PLATINUM COMPLEXES
COMPLEXES PALLADIUM ET PLATINE

(30) Priorität: 08.11.2002 DE 10251986
(43) Veröffentlichungstag der Anmeldung: 17.08.2005
(73) Patentinhaber: Merck Patent GmbH, 64293 Darmstadt (DE)
(72) Erfinder: STÖSSEL, Philipp, 60487 Frankfurt am Main (DE); BACH, Ingrid, 65719 Hofheim (DE); SPREITZER, Hubert, 68519 Viernheim (DE)
(86) Internationale Anmeldenummer: PCT/EP2003/012279
(87) Internationale Veröffentlichungsnummer: WO 2004/041835

(56) Entgegenhaltungen:
- EP-A- 1 191 613
- EP-A- 1 238 981
- WO-A-02/15645
- WO-A-02/068435

## Beschreibung

Metallorganische Verbindungen - speziell Verbindungen der d⁸-Metalle - werden in naher Zukunft als Wirkkomponenten (= Funktionsmaterialien) in einer Reihe von verschiedenartigen Anwendungen, die im weitesten Sinne der Elektronikindustrie zugerechnet werden können, Einsatz als funktionelle Komponenten finden.
Bei den auf organischen Komponenten basierenden Organischen-Elektrolumineszenz-Vorrichtungen (allg. Beschreibung des Aufbaus vgl.
US-A-4,539,507 und US-A-5,151,629) bzw. deren Einzelbauteilen, den Organischen-Lichtemittierenden-Dioden (OLEDs) ist die Markteinführung bereits erfolgt, wie die erhältlichen Auto-Radios mit "Organischem Display" der Firma Pioneer belegen. Auch bei den Polymeren OLEDs (PLEDs) ist ein erstes Produkt in Form einer kleineren Anzeige (in einem Rasierapparat der Fa. PHILIPS N.V.) auf dem Markt erhältlich. Weitere derartige Produkte stehen kurz vor der Einführung. Trotz allem sind hier noch deutliche Verbesserungen nötig, um diese Displays zu einer echten Konkurrenz zu den derzeit marktbeherrschenden Flüssigkristallanzeigen (LCD) zu machen bzw. diese zu überflügeln. Eine Entwicklung hierzu, die sich in den letzten Jahren abzeichnet, ist der Einsatz von metallorganischen Komplexen, die Phosphoreszenz statt Fluoreszenz zeigen [M. A. Baldo, S. Lamansky, P. E. Burrows, M. E. Thompson, S. R. Forrest, Applied Physics Letters, **1999**, *75*, 4-6].
Aus theoretischen Spin-statistischen Gründen ist unter Verwendung metallorganischer Verbindungen als Phosphoreszenz-Emittem eine bis zu vierfache Energie- und Leistungseffizienz möglich. Ob sich diese neue Entwicklung durchsetzen wird, hängt stark davon ab, ob entsprechende Device-Kompositionen gefunden werden können, die diese Vorteile (Triplett-Emission = Phosphoreszenz gegenüber Singulett-Emission = Fluoreszenz) auch in den OLEDs umsetzen können. Als wesentliche Bedingungen für praktische Anwendung sind hier insbesondere eine hohe operative Lebensdauer, eine hohe Stabilität gegenüber Temperaturbelastung und eine niedrige Einsatz- und Betriebsspannung, um mobile Applikationen zu ermöglichen, zu nennen.
Daneben muß der effiziente chemische Zugang zu den entsprechenden Organo-MetallVerbindungen gegeben sein. Von besonderem Interesse sind dabei Organo-Palladium- und Platin-Verbindungen. Bei diesen ist vor allem unter Berücksichtigung des Palladium- bzw. des Platinpreises von maßgebender Bedeutung, daß hier ein effizienter Zugang zu entsprechenden Derivaten ermöglicht wird.

Aus WO-A-02068435 sind Rhodium und Iridium-Komplexe sowie Verfahren zu deren Herstellung bekannt. Des Weiteren sind aus EP-A-1191613, EP-A-1238981 und WO-A-0215645 weitere Rhodium, Iridium, Palladium und Platin-Komplexe bekannt und deren Verwendung in Lumineszenzvorrichtungen.

Gegenstand der vorliegenden Erfindung sind 5'-Mono-, 5',5"-Di-Halogen-funktionalisierte mono- und bis-orthometallierte Organo-Palladium- und Organo-Platin-Verbindungen (gemäß Verbindungen (1), (1a) oder (2), (2a)), 5',5"-Mono- oder Di-Halogen-funktionalisierte bis-orthometallierte verbrückte Organo-Palladium- und Organo-Platin-Verbindungen (gemäß Verbindung (3) und (4)) und kationische, neutrale oder anionische 5'-Mono-Halogen-funktionalisierte mono-orthometallierte Organo-Palladium- und Organo-Platin-Verbindungen (gemäß Verbindung (5), (6), (7) und (8)), die zentrale Schlüsselbausteine zur Erzeugung hocheffizienter Triplett-Emitter sein werden, da die Halogenfunktion mit Hilfe von gängigen, in der Literatur beschriebenen Methoden in eine Vielzahl von Funktionen umgewandelt werden kann. Damit ist nicht nur der kovalente Einbau dieser aktiven, lichtemittierenden Zentren in eine Vielzahl von Polymeren möglich, sondern auch das Maßschneidern der optoelektronischen Eigenschaften dieser Bausteine. So sind hier - ausgehend von den genannten Strukturen - typische C-C-Verknüpfungsreaktionen (z. B. Stille- oder Suzuki-Kupplung), oder auch C-Heteroatom-Verknüpfungsreaktionen (z. B. für C-N: Hartwig-Buchwald-Kupplung, ähnliches auch für C-O und C-P) möglich, um damit die halogenfunktionalisierten Verbindungen entweder weiter zu funktionalisieren, oder als (Co)monomere bei der Darstellung von entsprechenden Polymeren zu verwenden.

5'-Mono-, 5',5"-Di-Halogen-funktionalisierte mono- und bis-orthometallierte Organo-Palladium- und Organo-Platin-Verbindungen (gemäß Verbindungen (1), (1a) oder (2), (2a)), 5',5"-Mono- oder Di-Halogen-funktionalisierte bis-orthometallierte verbrückte Organo-Palladium- und Organo-Platin-Verbindungen (gemäß Verbindung (3) und (4)) und kationische, neutrale oder anionische 5'-Mono-Halogen-funktionalisierte mono-orthometallierte Organo-Palladium- und Organo-Platin-Verbindungen (gemäß Verbindung (4), (6), (7) und (8)) sind bisher in der Literatur nicht beschrieben worden, ihre effiziente Darstellung und Verfügbarkeit als Reinstoffe ist aber für verschiedene elektro-optische Anwendungen von großer Bedeutung.

Als nächstliegender Stand der Technik kann die Mono-Bromierung und Mono-lodierung eines kationischen Ruthenium(II)komplexes, der neben dem orthometallierten 2-Phenylpyridin-Liganden auch noch 2,2'-Bipyridinliganden trägt, gesehen werden [C. Coudret, S. Fraysse, J.-P- Launay, Chem. Commun., **1998**, 663-664]. Als Bromierungsagens wird N-Brom-succinimid, als lodierungsagens ein Gemisch aus lodbenzol-diacetat und elementarem lod im molaren Verhältnis von eins zu eins verwendet. Die isolierte Ausbeute nach chromatographischer Reinigung wird im Fall der Bromierung mit 95 %, im Fall der lodierung mit 50 % angegeben.
Analog ist auch die von Clark et al. beschriebene Bromierung orthomethallierter 2-Phenylchinolin- und 2,3-Diphenylchinoxalin-Liganden von Ruthenium(II)- und Osmium(II)-Carbonyl-Chloro-Komplexen mit Pyridiniumperbromid zu sehen. Nach chromatographischer Reinigung wurden Ausbeuten von 27 % bis 92 % erhalten [A. M. Clark, C. E. F. Rickard, W. R. Roper, L. J. Wright J. Organomet. Chem., **2000**, *598*, 262-275].
Daneben konnte in der Anmeldung WO 02/068435 gezeigt werden, daß die Halogenierung von oktaedrischen homo- und heteroleptischen Rhodium- und Iridium-Komplexen mit orthometalliertem Ligandensatz sehr selektiv und in guten bis sehr guten Ausbeuten verläuft.

Dieser in den o. g. Literaturstellen beschriebene Stand der Technik, weist jedoch folgende Nachteile auf:
(1) Es wird nur die Halogenierung von Ru-, Os-, Rh- und lr-Komplexen, nicht aber diejenige von Pd- oder Pt-Verbindungen beschrieben.
(2) Es wird keine sinnvolle Lehre erteilt, wie quadratisch planare, homo- und heteroleptische Palladium- und Platin-Komplexe mit orthometalliertem Ligandensatz am koordinierten . Liganden selektiv halogeniert werden können. Vielmehr ist bekannt, daß diese der oxidativen Addition durch Halogene leicht zugänglich sind (L. Chassot, E. Müller, A. Zelewsky, Inorg. Chem. **1984**, *23*, 4249-4253) und somit gemäß dem Stand der Technik von quadratisch planarer zu oktaedrischer Geometrie wechseln.

Es wurde nun überraschend gefunden, daß die neuen Verbindungen (1), (1a), (2), (2a) - gemäß Schema 2 - ausgehend von den bis-orthometallierten Organo-Palladium bzw. Organo-Platin-Verbindungen (9), (9a), (10), (10a), und daß die neuen Verbindungen (3) oder (4) - gemäß Schema 3 - ausgehend von den bis-orthometallierten, verbrückten Organo-Palladium- und Organo-Platin-Verbindungen (11) oder (12), und daß die neuen Verbindungen (5), (6), (7) oder (8) - gemäß Schema 4 - ausgehend von den kationischen, neutralen oder anionischen funktionalisierten mono-orthometallierten Organo-Palladium- und Organo-Platin-Verbindungen (13), (14), (15) und (16) mit einem Halogen bzw. lnterhalogen, gegebenenfalls in Anwesenheit einer Base und gegebenenfalls einer Lewissäure, und in Anwesenheit oder unter nachfolgender Zugabe eines Reduktionsmittels, bzw. einer organischen N-Halogen-Verbindung, gegebenenfalls in Anwesenheit einer Brönstedsäure, und in Anwesenheit oder unter nachfolgender Zugabe eines Reduktionsmittels, bzw. einem Halogenierungsagens bestehend aus einer organischen O-Halogen-Verbindung und einem Halogen X₂, in Anwesenheit oder unter nachfolgender Zugabe eines Reduktionsmittels, unter geeigneter Wahl des stöchiometrischen Verhältnisses des entsprechenden Halogenierungsagens zu den Verbindungen (9), (10), (11), (12), (13), (14), (15) bzw. (16) sowie unter geeigneter Wahl der Reaktionsparameter wie Reaktionstemperatur, Reaktionsmedium, Konzentration und Reaktionszeiten reproduzierbar in mehr als 80 %iger Ausbeute, ohne Verwendung chromatographischer Reinigungsverfahren, gegebenenfalls nach Umkristallisation, in Reinheiten von >99 % nach NMR bzw. HPLC erhalten werden (siehe Beispiel 1-3).

Das oben beschriebene Verfahren zeichnet sich durch mehrere Eigenschaften besonders aus, die bisher nicht in der Literatur beschrieben wurden:
1) Ohne dadurch an eine bestimmte Theorie gebunden sein zu wollen, vermuten wir, daß die außergewöhnliche Tendenz von quadratisch planaren Palladium- und Platin-Komplexen zur oxidativen Addition von Elektrophilen - hier von Halogenen bzw. deren Halogenium-lonen transferierenden Analoga -stets zur Folge hat, daß zunächst eine schnelle oxidative Addition an das Metallzentrum unter Verbrauch eines Aquivalentes Halogen und Bildung von oktaedrischen Dihalogenpalladium(IV)- und -platin(IV)-Komplexen eintritt. In einem zweiten, nachfolgenden Schritt reagieren diese unter Halogenierung der Liganden mit weiteren Äquivalenten Halogen zu oktaedrischen Dihalogenpalladium(IV)- und -platin(IV)-Komplexen mit halogeniertem, orthometallierten Ligandensatz. Die anschließende Reduktion dieser oktaedrischen Dihalogenpalladium(IV)- und -platin(IV)-Komplexen mit halogeniertem orthometalliertem Ligandensatz führt dann zu den hier beschriebenen quadratisch planaren Palladium(II)- und Platin(II)komplexen mit entsprechend halogeniertem Ligandensatz. In Schema 1 ist diese Reaktionssequenz schematisch dargestellt. 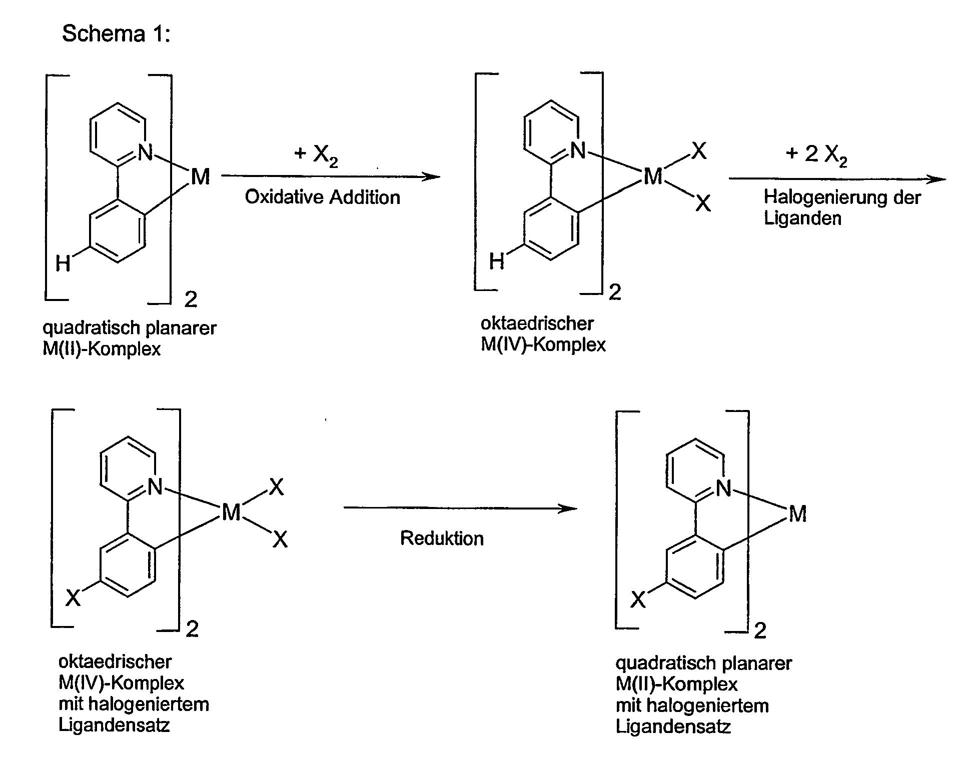
2) Die selektive 5'-Mono- und 5',5"-Di-Halogenierung an quadratisch planaren Palladium(II)- und Platin(II)-Komplexen via den oben beschriebenen Dihalogenpalladium(IV)- und -platin(IV)-Komplexen ist unerwartet und in dieser Form nicht bekannt. Vermutlich resultiert die beobachtete hohe Selektivität aus der Aktivierung, die die zum Palladium- bzw. Platin-Atom para-ständige Position durch dieses erfährt. Die unerwartet hohe Aktivität dieser Position gegenüber einer elektrophilen Substitution, hier der Halogenierung, wird durch den Einsatz milder Halogenierungsagenzien gezielt ausgenutzt.
3) Entscheidend zur Erzielung von hohen Selektivitäten und hohen Reaktionsgeschwindigkeiten ist häufig, je nach Halogenierungsagens, das Arbeiten in Gegenwart eines säurebindenden Agens, welches die im Verlauf der Substitution gebildete Halogenwasserstoffsäure bindet. Dies ist ein überraschender Befund, durch den Nebenreaktionen offenbar wirksam unterdrückt werden. Die erfindungsgemäßen Halogenierungsagenzien enthalten dementsprechend ein säurebindendes Agens, wie eine Base, welche entweder intrinsischer Bestandteil des Halogenierungsagens ist oder zusätzlich zum Halogenierungsagens zugesetzt wird.
4) Der hohe erzielte Umsatz, der sich in den reproduzierbar sehr guten Ausbeuten an isoliertem Produkt widerspiegelt, ist unerwartet und einzigartig für die Halogenierung von orthometallierten Liganden, gebunden an Metalle der Nickelgruppe.
5) Die erhaltenen Verbindungen fallen ohne aufwendige chromatographische Reinigung, gegebenenfalls nach Umkristallisation, in sehr guten Reinheiten von >99 % nach NMR bzw. HPLC an. Dies ist für die Verwendung in opto-elektronischen Bauelementen, bzw. der Benutzung als wertvolle Zwischenprodukte für die Darstellung entsprechender Verbindungen essentiell.

Wie oben geschildert, sind die erfindungsgemäßen Verbindungen nicht vorbeschrieben und damit neu.

Gegenstand der vorliegenden Erfindung sind somit die Verbindungen (1) und (2) gemäß Schema 2, 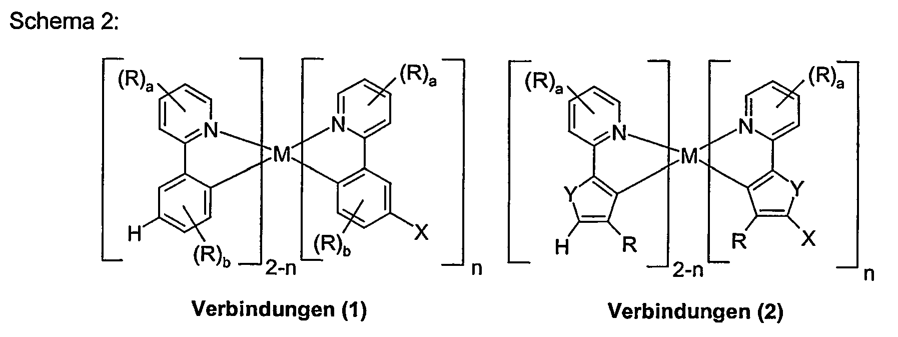 wobei die Symbole und Indizes folgende Bedeutung haben:
- M: Pd, Pt;
- X: Cl, Br, I;
- Y: O, S, Se, NR¹;
- R: ist gleich oder verschieden bei jedem Auftreten H, F, Cl, Br, I, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- R¹: sind gleich oder verschieden bei jedem Auftreten H oder ein aliphatischer oder aromatischer Kohlenwasserstoffrest mit 1 bis 20 C-Atomen;
- a: ist 0, 1, 2, 3 oder 4, bevorzugt 0, 1 oder 2;
- b: ist 0, 1, 2 oder 3, bevorzugt 0 oder 1;
- n: ist 1 oder 2.

Eine weitere Ausführungsform der Erfindung sind solche Pd- bzw. Pt-Komplexe, die gleichzeitig Liganden vom Typ wie bei Verbindungen (1) und solche von Verbindungen (2) aufweisen, d. h. gemischte Ligandensysteme. Diese werden durch die Formeln (1a) und (2a) beschrieben: 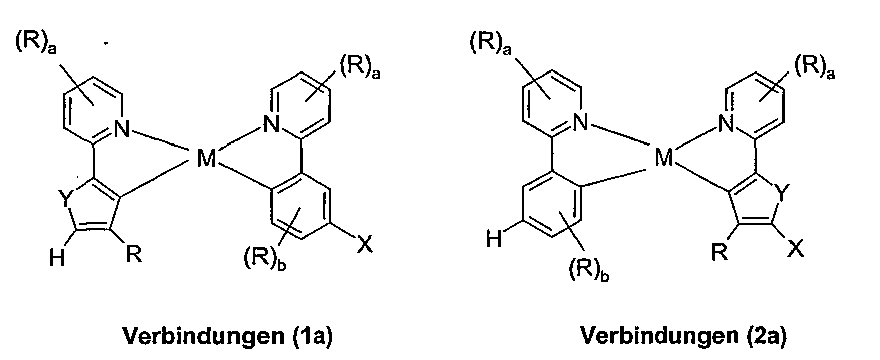 wobei die Symbole und Indizes die unter den Formeln (1) und (2) genannten Bedeutungen haben.

Ebenfalls Gegenstand der vorliegenden Erfindung sind die Verbindungen (3) und (4) gemäß Schema 3, 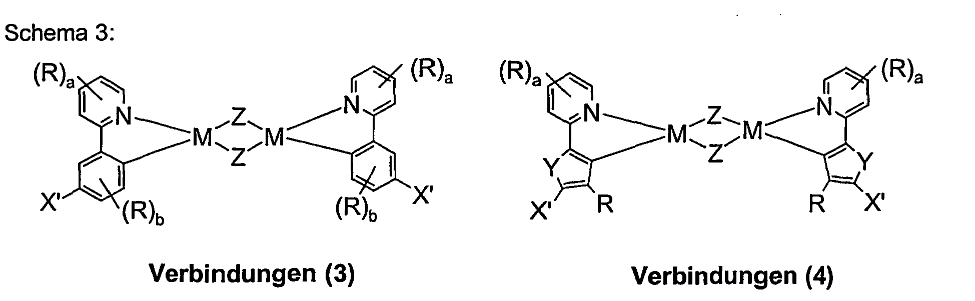 wobei die Symbole und Indizes folgende Bedeutung haben:
- M: Pd, Pt;
- X': H, Cl, Br oder I, mit der Maßgabe, daß pro Formel für mindestens ein X' gilt, daß es aus Cl, Br oder I ausgewählt ist;
- Y: O, S, Se, NR¹;
- Z: ist gleich F, Cl, Br, I, O-R¹, S-R¹, N(R¹)₂;
- R: ist gleich oder verschieden bei jedem Auftreten H, F, Cl, Br, I, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹-, oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- R¹: sind gleich oder verschieden bei jedem Auftreten H oder ein aliphatischer oder aromatischer Kohlenwasserstoffrest mit 1 bis 20 C-Atomen;
- a: ist 0, 1, 2, 3 oder 4, bevorzugt 0, 1 oder 2;
- b: ist 0, 1, 2 oder 3, bevorzugt 0 oder 1.

Ebenfalls Gegenstand der vorliegenden Erfindung sind die Verbindungen (5), (6), (7) und (8) gemäß Schema 4, 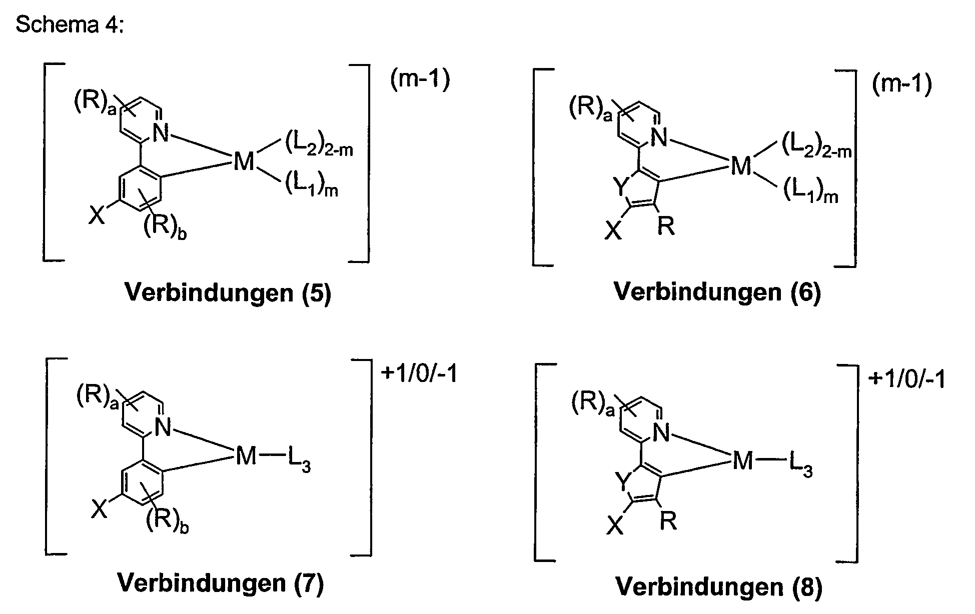 wobei die Symbole und Indizes folgende Bedeutung haben:
- M: Pd, Pt;
- X: Cl, Br, I;
- Y: O, S, Se, NR¹;
- R: ist gleich oder verschieden bei jedem Auftreten H, F, Cl, Br, I, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹-, oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- R¹: sind gleich oder verschieden bei jedem Auftreten H oder ein aliphatischer oder aromatischer Kohlenwasserstoffrest mit 1 bis 20 C-Atomen;
- L₁: ist ein neutraler, einzähniger Ligand;
- L₂: ist ein monoanionischer, einzähniger Ligand;
- L₃: ist ein neutraler oder mono- oder dianionischer zweizähniger Ligand;
- a: ist 0, 1, 2, 3 oder 4, bevorzugt 0, 1 oder 2;
- b: ist 0, 1, 2 oder 3, bevorzugt 0 oder 1;
- m: ist 0, 1 oder 2.

Erfindungsgemäße neutrale, einzähnige Liganden L₁ sind Kohlenmonoxid, Isonitrile wie z. B. *tert*-Butyl-isonitril, Cyclohexylisonitril, Adamantylisonitril, Amine wie z. B. Trimethylamin, Triethylamin, Morpholin, Phosphine wie z. B. Trifluorphosphin, aber auch aliphatische, aromatische oder heteroaromatische Phosphine wie, Trimethylphosphin, Tricyclohexylphosphin, Dicyclohexylphenylphosphin, Tri-o-tolyl-phosphin, Tri*-tert* butylphosphin, Triphenylphosphin, Tris(pentafluorphenyl)phosphin, Phosphite wie z. B. Trimethylphosphit, Triethylphosphit, Arsine wie z. B. Trifluorarsin, Trimethylarsin, Tricyclohexylarsin, Tri-*tert*-butylarsin, Triphenylarsin, Tris(pentafluorphenyl)arsin, Stibine wie z. B. Trifluorstibin, Trimethylstibin, Tricyclohexylstibin, Tri-*tert* butylstibin, Triphenylstibin, Tris(pentafluorphenyl)stibin und stickstoffhaltige Heterocyclen wie z. B. Pyridin, Pyridazin, Pyrazin, Triazin.

Erfindungsgemäße monoanionische, einzähnige Liganden L₂ sind Halogenide, wie F, Cl, Br, I, Cyanid, Cyanat, Iso-cyanat, Thiocyanat, Iso-thiocyanat, Alkoholate wie z. B. Methanolat, Ethanolat, Propanolat, *iso*-Propanolat, *tert*-Butylat, Phenolat, Thioalkoholate wie z. B. Methanthiolat, Ethanthiolat, Propanthiolat, *iso*-Propanthiolat, *tert*-Thiobutylat, Thiophenolat, Amide wie z. B. Dimethylamid, Diethylamid, Di-*iso*-propylamid, Carboxylate wie z. B. Acetat, Trifluoracetat, Propionat, Benzoat und anionische, stickstoffhaltige Heterocyclen wie Morpholid, Pyrrolid, Imidazolid, Pyrazolid.

Erfindungsgemäße neutrale oder mono- oder dianionische zweizähnige Liganden L₃ sind Diamine wie z. B. Ethylendiamin, N,N,N',N'-Tetramethylethylendiamin, Propylendiamin, N,N,N',N'-Tetramethylpropylendiamin, cis-, trans-Diaminocyclohexan, cis-, trans-N,N,N',N'-Tetramethyldiaminocyclohexan, Imine wie z. B. 2[(1-(Phenylimino)ethyl]pyridin, 2[(1-(2-Methylphenylimino)ethyl]pyridin, 2[(1-(2,6-Di-iso-propylphenylimino)ethyl]pyridin, 2[(1-(Methylimino)ethyl]pyridin, 2[(1-(ethylimino)ethyl]pyridin, 2[(1-(Iso-Propylimino)ethyl]pyridin, 2[(1-(Tert-Butylimino)ethyl]pyridin, Dümine wie z. B. 1,2-Bis(methylimino)ethan, 1,2-Bis(ethylimino)ethan, 1,2-Bis(iso-propylimino)ethan, 1,2-Bis(tert-butylimino)ethan, 2,3-Bis(methylimino)butan, 2,3-Bis(ethylimino)butan, 2,3-Bis(iso-propylimino)butan, 2,3-Bis(tert-butylimino)butan, 1,2-Bis(phenylimino)ethan, 1,2-Bis(2-methylphenylimino)ethan, 1,2-Bis(2,6-di-iso-propylphenylimino)ethan, 1,2-Bis(2,6-di-tert-butylphenylimino)ethan, 2,3-Bis(phenylimino)butan, 2,3-Bis(2-methylphenylimino)butan, 2,3-Bis(2,6-di-iso-propylphenylimino)butan, 2,3-Bis(2,6-di-tert-butylphenylimino)butan, Heterocylen enthaltend zwei Stickstoffatome wie z. B. 2,2'-Bipyridin, o-Phenanthrolin, Diphosphine wie z. B. Bis-diphenylphosphinomethan, Bis-diphenylphosphinoethan, Bis(diphenylphosphino)propan, Bis(dimethylphosphino)methan, Bis(dimethylphosphino)ethan, Bis(dimethylphosphino)propan, Bis(diethylphosphino)methan, Bis(diethylphosphino)ethan, Bis(diethylphosphino)propan, Bis(di-tert-butylphosphino)methan, Bis(di-tert-butylphosphino)ethan, Bis(tert-butylphosphino)propan, 1,3-Diketonate abgeleitet von 1,3-Diketonen wie z. B. Acetylaceton, Benzoylaceton, 1,5-Diphenylacetylaceton, Dibenzolymethan, Bis(1,1,1-tri-fluoracetyl)methan, 3-Ketonate abgeleitet von 3-Ketoestern wie z. B. Acetessigsäureethylester, Carboxylate abgeleitet von Aminocarbonsäuren wie z. B. Pyridin-2-carbonsäure, Chinolin-2-carbonsäure, Glycin, Dimethylglycin, Alanin, Dimethylaminoalanin, Salicyliminate abgeleitet von Salicyliminen wie z. B. Methylsalicylimin, Ethylsalicylimin, Phenylsalicylimin, Dialkoholate abgeleitet von Dialkoholen wie z. B. Ethylenglykol, 1,3-Propylenglykol, Dithiolate abgeleitet von Dithiolen wie z. B. 1,2-Ethylendithiol, 1,3-Propylendithiol, oder Heteroarylborate, wie z. B. Tetrakis(1-imidazolyl)borat oder Tetrakis(1-pyrazolyl)borat.

Die erfindungsgemäßen Komplexe (1) bis (8) und (1a) und (2a) weisen folgende Vorteile gegenüber dem Stand der Technik auf:
1) Durch die Funktionalisierung ist es ein einfaches, diese Komplexe z. B. in entsprechende Polymere oder Oligomere als (Co)monomere kovalent einzubauen. Dies kann sowohl in die Hauptkette, als auch am Ende der Hauptkette, als auch bei entsprechenden Weiterreaktionen in die Seitenkette des Polymers erfolgen.
2) Analog ist es durch entsprechende Umsetzungen möglich, "definierte nieder-molekulare Komplexe", welche jedoch spezielle Eigenschaften (z. B. hohe Löslichkeit, geringe Kristallisationstendenz) aufweisen, bereit zu stellen. Auch der Einbau in definierte Oligomere (z. B. Dendrimere) ist durch dieselben Reaktionen mühelos möglich.
3) Der unter 1) und 2) geschilderte Zugang zu entsprechenden Funktionalisierungen ist von sehr hoher Bedeutung, da es sehr wichtig ist, Metallkomplexe entweder in Polymere oder in gut lösliche niedermolekulare Substanzen zu integrieren.
4) Vorteilhaft ist ebenfalls, daß die beanspruchten Komplexe in guter Reinheit und hoher Ausbeute darstellbar sind. Dies ist zum einen für die entsprechenden Anwendungen (Weiterverarbeitung für den Einsatz in elektrischen bzw. elektronischen Vorrichtungen, z. B. Displays auf OLED bzw. PLED Basis), als auch kommerziell (wegen des hohen Rohstoff-Preises) von enormer Bedeutung.

Ein weiterer Gegenstand der vorliegenden Erfindung sind Verfahren zur Herstellung der Verbindungen (1), (2), (3), (4), (5), (6), (7) und (8) durch Umsetzung der Verbindungen (9), (10), (11), (12), (13), (14), (15) und (16) gemäß Schema 5, 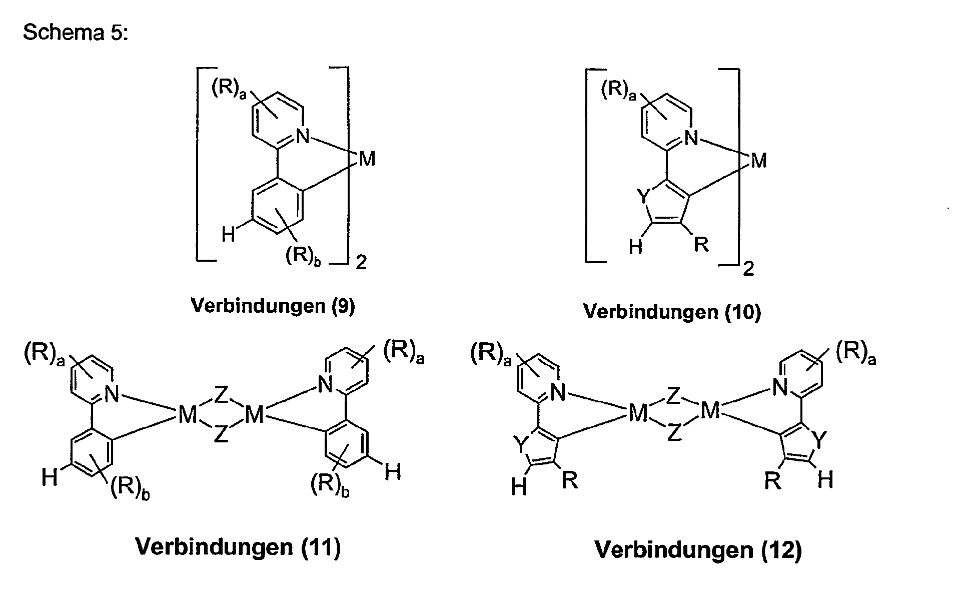 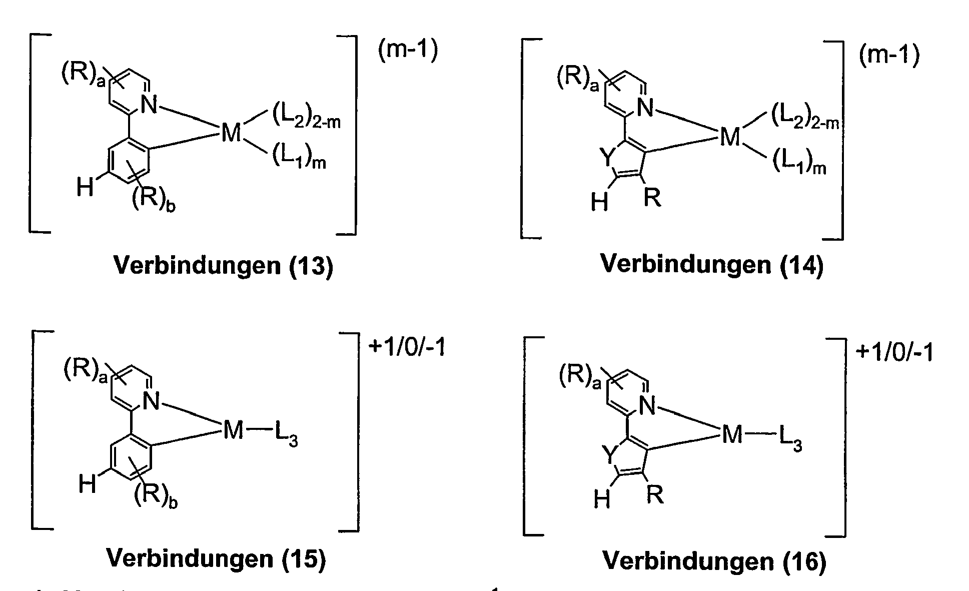 worin M und die Reste und Indizes X, Y, Z, R, R¹, L₁, L₂, L₃, a, b und m die oben genannten Bedeutungen haben, mit Halogenierungsagenzien, gefolgt von Reduktionsmitteln.

Das erfindungsgemäße Verfahren wird durch Schema 6 erläutert:

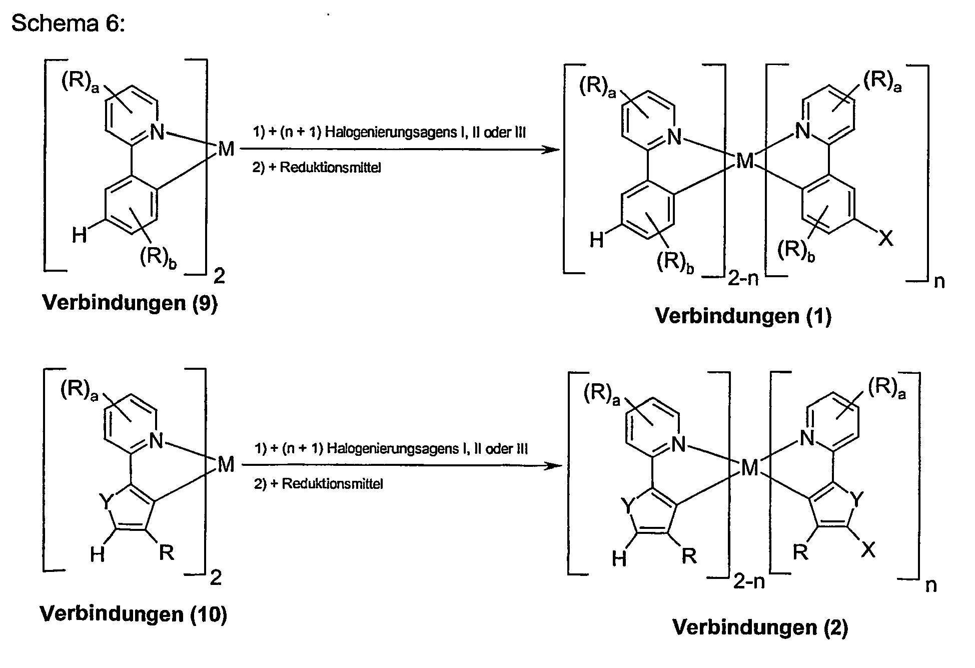

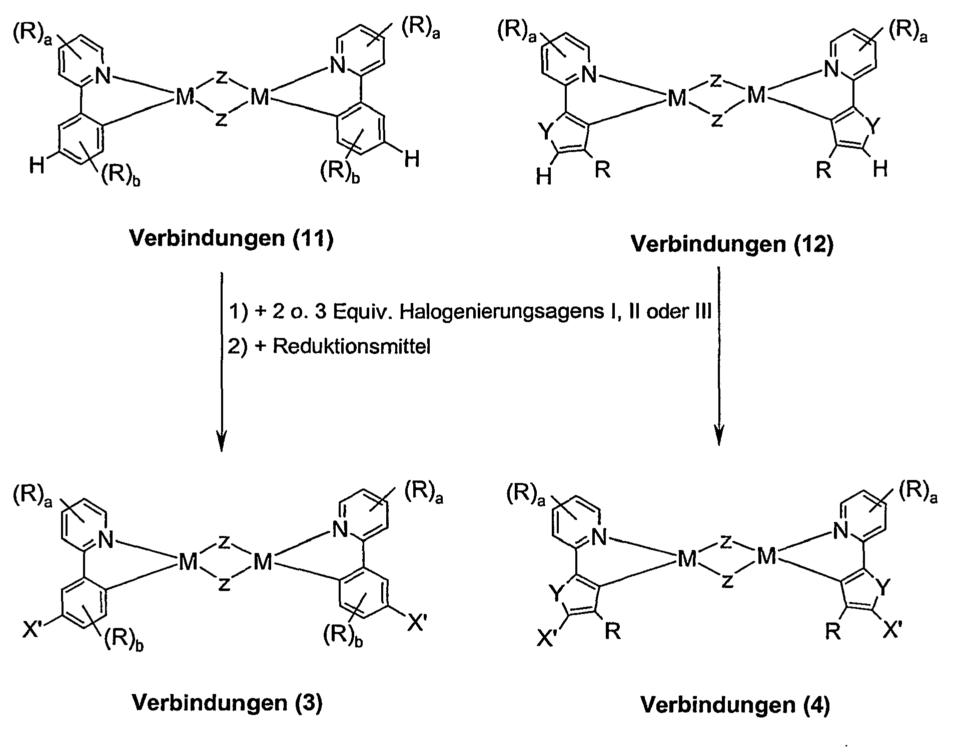

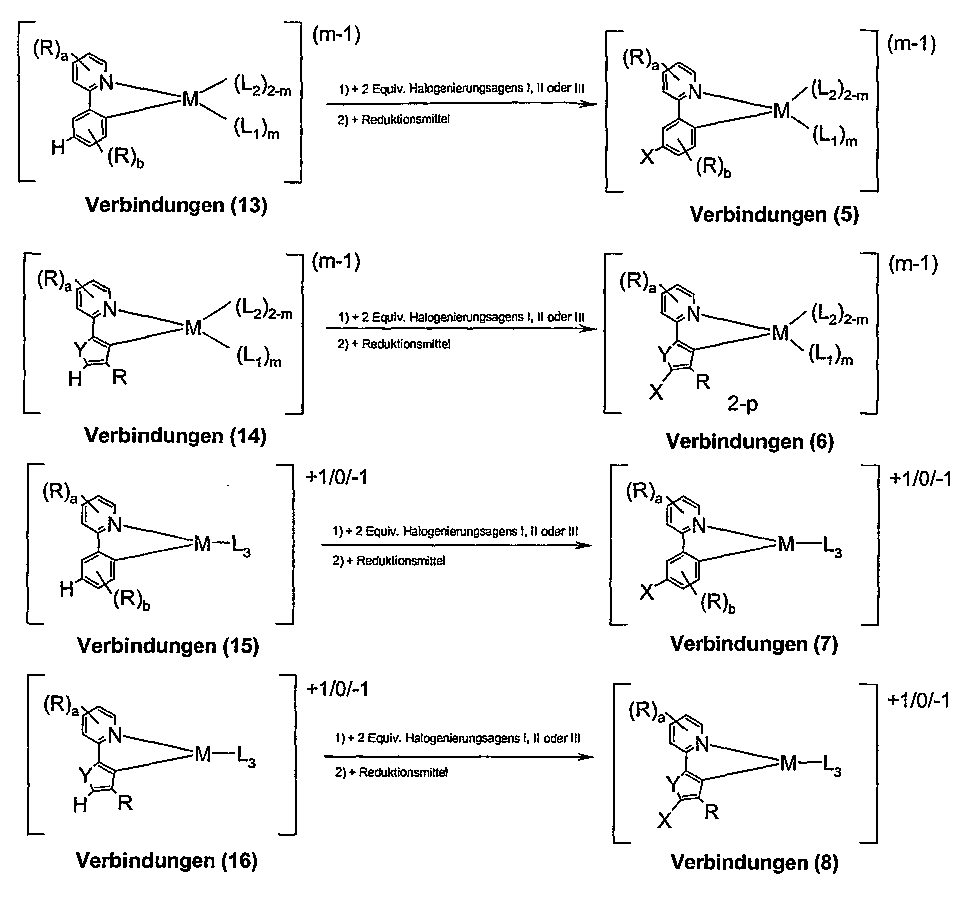

### Analog dazu können auch die Verbindungen (1a) und (2a) dargestellt werden.

Erfindungsgemäße Halogenierungsagenzien sind die Halogene X₂ bzw. die Interhalogene X-X und eine Base im molaren Verhältnis 1 : 1 bis 1 : 100 und gegebenenfalls eine Lewis-Säure im molaren Verhältnis (Halogen zu Lewissäure) von 1 : 0.1 bis 1 : 0.0001, so z. B. Chlor, Brom oder lod bzw. Chlorfluorid, Bromfluorid, lodfluorid, Bromchlorid, lodchlorid oder lodbromid in Kombination mit organischen Basen wie Aminen, so z. B. Triethylamin, Tri-n-butylamin, Diisopropyl-ethylamin, Morpholin, N-Methylmorpholin und Pyridin, oder Salzen von Carbonsäuren wie Natriumacetat, Natriumpropionat, Natriumbenzoat, oder anorganische Basen wie Natrium- oder Kalium-phosphat oder -hydrogenphosphat, Natrium- oder Kaliumhydrogencarbonat, Natrium- oder Kaliumcarbonat, aber auch organische Bromkomplexe, wie Pyridiniumperbromid, jeweils gegebenenfalls in Kombination mit einer Lewis-Säure wie z. B. Bortrifluorid, Bortrifluoridetherat, Bortrichlorid, Bortribromid, Bortriiodid, Aluminiumtrichlorid, Aluminiumtribromid, Aluminiumtriodid, Eisen(III)chlorid, Eisen(III)bromid, Zink(II)chlorid, Zink(II)bromid, Zinn(IV)chlorid, Zinn(IV)bromid, Phosphorpentachlorid, Arsenpentachlorid und Antimonpentachlorid. Diese Halogenierungsagenzien werden nachfolgend Halogenierungsagenzien (I) genannt.

Weitere erfindungsgemäße Halogenierungsagenzien sind organische N-Halogen-Verbindungen, N-Halogen-carbonsäureamide so z. B. N-Chlor-, N-Brom- und N-lod-acetamid, N-Chlor-, N-Brom- und N-lod-propionamid, N-Chlor-, N-Brom- und N-lodbenzoesäureamid, oder N-Halogen-carbonsäureimide wie z. B. N-Chlor-, N-Brom- und N-lod-succinimid, N-Chlor-, N-Brom und N-lod-phthalimid, oder N-Dihalogensulfonsäureamide, wie Benzolsulfo-N-dibromamid, oder N-Halogen-sulfonsäureamid-salze, wie Chloramin B oder T.
Diese Halogenierungsagenzien werden nachfolgend Halogenierungsagenzien (II) genannt. Bei den Halogenierungsagenzien (II) kann der additive Einsatz von Lewissäuren, wie sie beispielsweise oben aufgeführt wurden, ebenfalls vorteilhaft sein.
Bei den Halogenierungsagenzien (II) kann der additive Einsatz von Brönstedsäuren wie z. B. Salzsäure, Bromwasserstoffsäure, lodwasserstoffsäure, Schwefelsäure oder Phosphorsäure ebenfalls vorteilhaft sein.

Nochmals weitere erfindungsgemäße Halogenierungsagenzien sind organische O-Hal-Verbindungen und Halogene X₂ im molaren Verhältnis von 0.5 : 1 bis 1 : 1, wielodaryl-dicarboxylate im molaren Verhältnis von 0.5 : 1 bis 1 : 1 mit einem Halogen X₂ so z. B. lodbenzol-diacetat bzw. Bistrifluoracetoxy-iodbenzol und elementares Brom im molaren Verhältnis von 0.5 : 1 bis 1 : 1 oder lodbenzol-diacetat bzw. Bistrifluoracetoxy-iodbenzol und elementares lod im molaren Verhältnis von 0.5 : 1 bis 1 : 1.
Diese Halogenierungsagenzien werden nachfolgend Halogenierungsagenzien (III) genannt.

Im erfindungsgemäßen Verfahren führt ein stöchiometrisches Verhältnis der Halogenierungsagenzien (I), (II) oder (III) - bezogen auf den Gehalt an aktivem Halogen - zu den Verbindungen (9), (10), (11), (12), (13), (14), (15) oder (16) von 2 : 1 selektiv zu den Verbindungen (1), (2) mit n = 1, (3), (4) mit X' ist einmal H und einmal Halogen, und zu den Verbindungen (5), (6), (7) oder (8). Dies ist ein überraschendes und nicht vorhersehbares Ergebnis.

Im erfindungsgemäßen Verfahren führt ein stöchiometrisches Verhältnis der Halogenierungsagenzien (I), (II) oder (III) - bezogen auf den Gehalt an aktivem Halogen - zu den Verbindungen (9), (10), (11) oder (12) von 3 : 1 bis 1000 : 1 selektiv zu den Verbindungen (1), (2) mit n = 2, bzw. (3), (4) mit X' ist zweimal Halogen. Dies ist ein überraschendes und nicht vorhersehbares Ergebnis.

Die hier beschriebenen stöchiometrischen Verhältnisse sind bevorzugte Ausführungsformen der vorliegenden Erfindung, da sie zu einheitlich substituierten Produkten führen. Es ist selbstverständlich, daß leichte Abweichungen von den o. g. Verhältnissen immer noch zu guten bis akzeptablen Ergebnissen führen.

Erfindungsgemäß wird der Reaktionsmischung ein Reduktionsmittel im molaren Verhältnis von 1 : 1 bis 10000 : 1 bezogen auf die Verbindungen (9), (10), (11), (12), (13), (14), (15) oder (16) zugesetzt. Der Zusatz kann dabei entweder zeitgleich mit dem Zusatz der Halogenierungsagenzien (I), (II) bzw. (III) oder bevorzugt zeitlich verzögert zu diesem erfolgen.
Erfindungsgemäße Reduktionsmittel sind Hydrazin(hydrat) bzw. dessen Salze, wie z. B. Hydrazinhydrochlorid, -hydrobromid, -hydroiodid, Hydrazinsulfat, Hydrazinnitrat und Hydrazinphosphat, Hydroxylamin bzw. dessen Salze, wie z. B. Hydroxylaminhydrochlorid, -hydrobromid, -hydroiodid, Hydroxylaminnitrat, Hydroxylaminphosphat und Hydroxylaminsulfat, Hydroxylamin-O-sulfonsäure und Hydrochinone, wie z. B. Hydrochinon oder Tetramethylhydrochinon, Alkalimetall- und Erdalkalimetallsulfite, wie Lithium-, Natrium-, Kalium- und Magnesiumsulfit, Alkalimetall- und Erdalkalimetalldithionite, wie z. B. Lithium-, Natrium-, Kalium- und Magnesiumdithionit, Alkali- und Erdalkalimetalle, wie z. B. Lithium, Natrium, Kalium und Magnesium, Calcium, Barium, und ihre Amalgame und andere entsprechende Legierungen, Übergangsmetalle wie Mangan, Eisen, Nickel und Zink und Übergangsmetalllegierungen, wie z. B. Raney-Nickel.

Erfindungsgemäß kann die Reduktion auch durch trockenes Erhitzen der intermediär gebildeten und in Substanz isolierten Palladium(IV)- bzw. Platin(V1)-Verbindungen im Vakuum erfolgen.

Erfindungsgemäße Reaktionsmedien sind protische oder aprotische, halogenfreie oder halogenierte Lösemittel, so z. B. Alkohole wie Methanol, Ethanol, Propanol, Butanol, mehrwertige Alkohole wie Ethylenglykol oder Propylenglykol, Nitrile wie Acetonitril, Propionitril oder Benzonitril, Ether wie Diethylether, THF oder Dioxan, aromatische Kohlenwasserstoffe wie Benzonitril, Nitrobenzol oder Chlorbenzol, N,N-Dialkylamide wie Dimethylformamid, Dimethylacetamid oder N-Methylpyrrolidinon, Sulfoxide wie Dimethylsulfoxid, Sulfone wie Dimethylsulfon oder Sulfolan, halogenierte Kohlenwasserstoffe wie Dichlormethan, Trichlormethan, 1,1-Dichlorethan, 1,2-Dichlorethan, 1,1,2,2-Tetrachlorethan, bevorzugt sind aromatische oder chlorierte Lösemittel.

Erfindungsgemäß wird die Umsetzung im Temperaturbereich von -78 °C bis 150 °C, bevorzugt bei 0 °C bis 100 °C, ganz bevorzugt bei 10 °C bis 60 °C durchgeführt.

Erfindungsgemäß liegt die Konzentration der Palladium-haltigen bzw. Platin-haltigen Edukte - Verbindungen (9), (10), (11), (12), (13), (14), (15) oder (16) - im Bereich von 0.0005 mol/l bis 2 mol/l, besonders bevorzugt im Bereich von 0.002 mol/l bis 0.1 mol/l.

Erfindungsgemäß können die Palladium-haltigen bzw. Platin-haltigen Edukte gelöst oder suspendiert im Reaktionsmedium vorliegen.

Erfindungsgemäß wird die Reaktion innerhalb von 10 Minuten bis zu 100 Stunden durchgeführt, bevorzugt innerhalb von 1 h bis 40 h.

Mit den hier erläuterten Synthesemethoden lassen sich unter anderem die im folgenden dargestellten Beispiele für die Verbindungen (1), (1a), (2), (2a), (3), (4), (5), (6), (7) bzw. (8) herstellen.

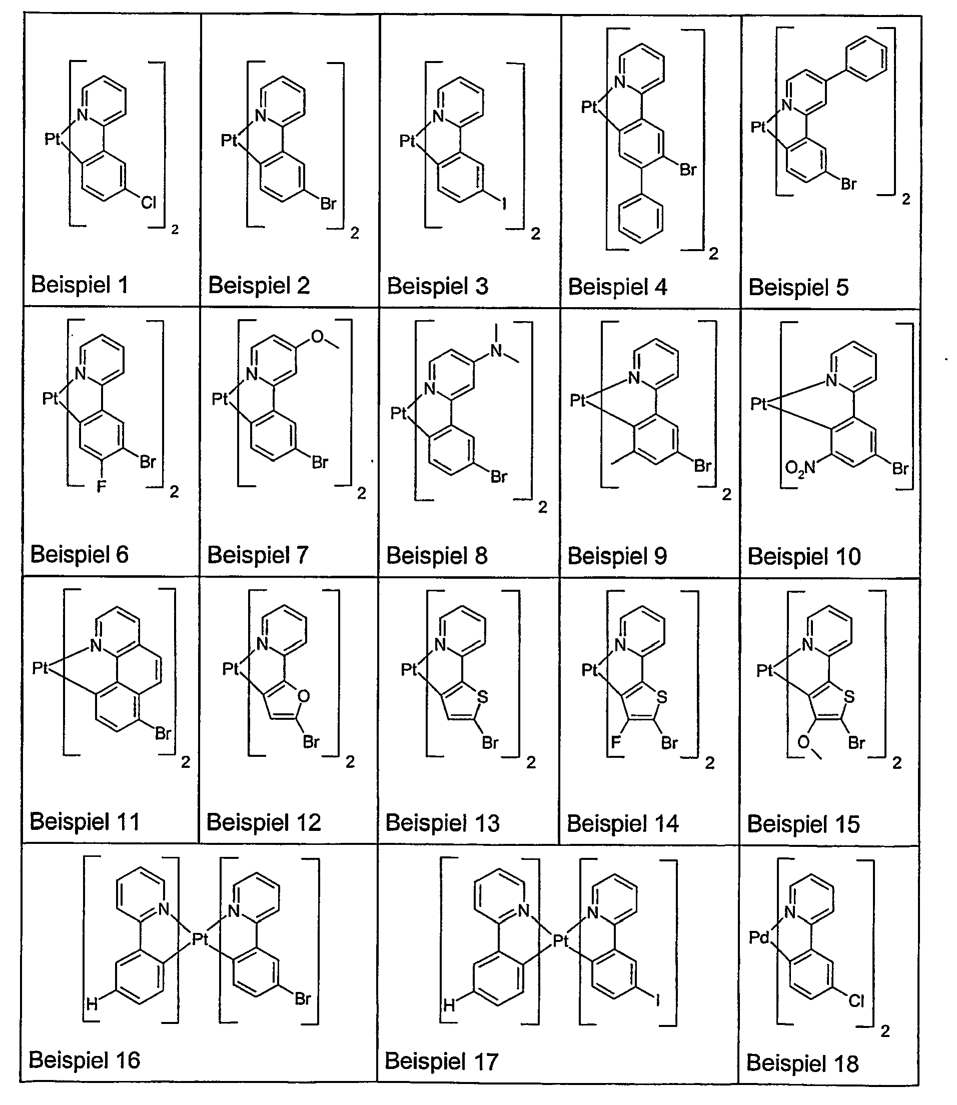

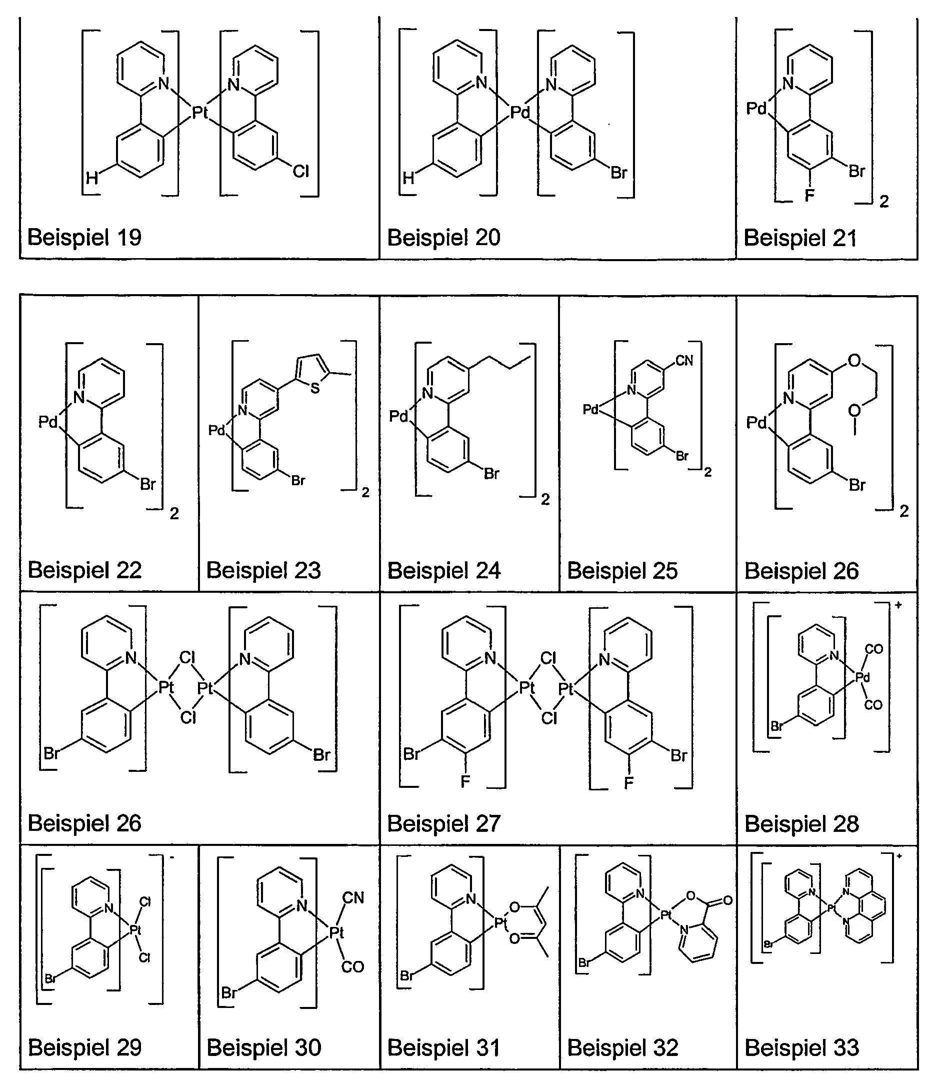

Die so erhaltenen erfindungsgemäßen Verbindungen können beispielsweise als CoMonomere für Erzeugung entsprechender konjugierter oder auch teilkonjugierter oder nichtkonjugierter Polymere Verwendung finden. Die entsprechende Einpolymerisation erfolgt dabei bevorzugt über die Halogenfunktionalität. So können sie u. a. in lösliche Polyfluorene (z. B. gemäß EP-A-842208 oder WO 00/22026), Poly-spirobifluorene (z. B. gemäß EP-A-707020 oder EP-A-894107), Poly-para-phenylene (z. B. gemäß WO 92/18552), Poly-carbazole oder auch Polythiophene (z. B. gemäß EP-A-1028136) einpolymerisiert werden.

Weiterer Gegenstand der Erfindung sind somit konjugierte, teilkonjugierte und nicht-konjugierte Polymere enthaltend eine oder mehrere Verbindungen der Formel (1') und/oder (2') 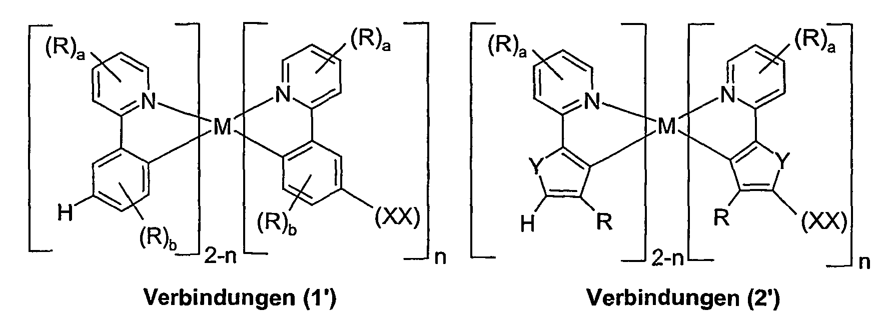 und/oder der Formel (1a') und/oder (2a') 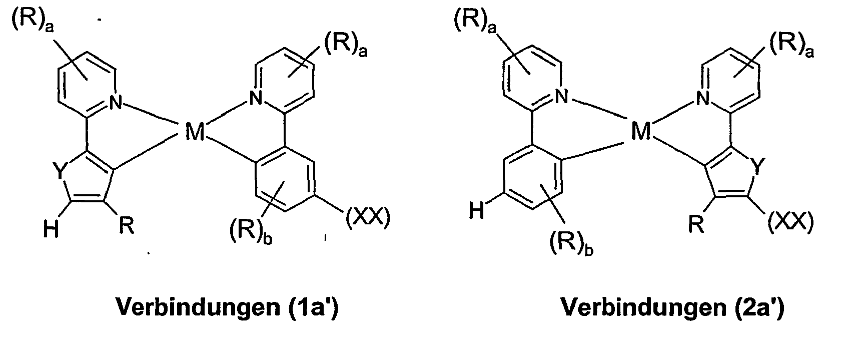 und/oder der Formel (3'), (4'), (5'), (6'), (7') und/oder (8'), 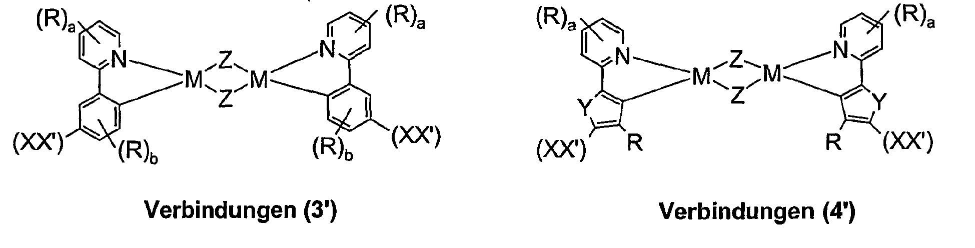 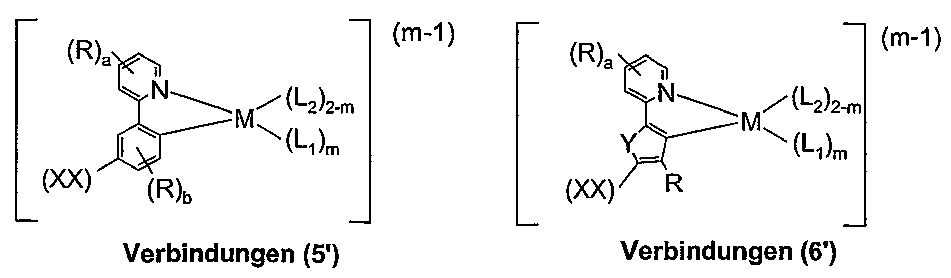 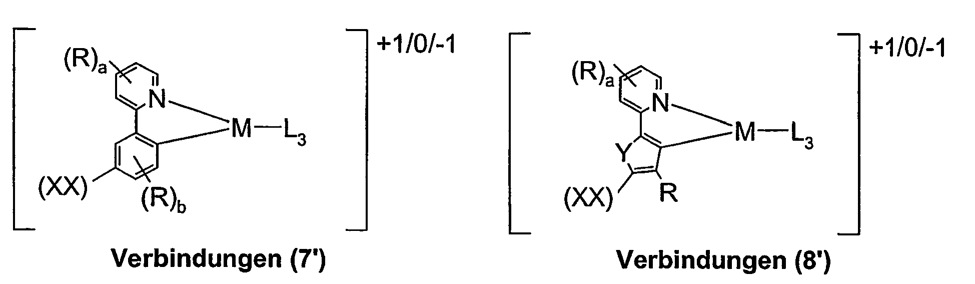 wobei die Symbole und Indizes folgende Bedeutung haben:
- M: Pd, Pt;
- Y: O, S, Se, NR¹;
- R: ist gleich oder verschieden bei jedem Auftreten H, F, Cl, Br, I, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂₋, -S-, -NR¹- oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
- R¹: sind gleich oder verschieden bei jedem Auftreten H oder ein aliphatischer oder aromatischer Kohlenwasserstoffrest mit 1 bis 20 C-Atomen;
- L₁: ist ein neutraler, einzähniger Ligand;
- L₂: ist ein monoanionischer, einzähniger Ligand;
- L₃: ist ein neutraler oder mono- oder dianionischer zweizähniger Ligand;
- a: ist 0, 1, 2, 3 oder 4;
- b: ist 0, 1, 2 oder 3;
- m: ist 0, 1 oder 2;
- n: ist 1 oder 2;
- (XX): eine Bindung zum konjugierten, teilkonjugierten oder nicht-konjugierten Polymer darstellt;
- (XX'): H oder eine Bindung zum konjugierten, teilkonjugierten oder nicht-konjugierten Polymer darstellt, aber pro Formel mindestens ein (XX') eine Bindung zum konjugierten, teilkonjugierten oder nicht-konjugierten Polymer darstellt.

Bevorzugt sind dabei konjugierte, teilkonjugierte oder nicht-konjugierte Polymere, die unter Verwendung einer oder mehrerer Verbindungen gemäß Formel (1), (1a), (2), (2a) und/oder (3) bis (8) erhalten wurden.

Als konjugierte oder teilkonjugierte Polymere werden Polyfluorenene, Poly-spirobifluorene, Poly-para-phenylenene, Poly-carbazole oder Polythiophene verstanden.

Vorzugsweise handelt es sich bei den konjugierten oder teilkonjugierten Polymeren auf Basis von Polyfluorenen um die in EP-A-842208 und WO 00/22026 offenbarten Polyfluorene.

Vorzugsweise handelt es sich bei den konjugierten oder teilkonjugierten Polymeren auf Basis von Poly-spirobifluorenen um die in EP-A-707020 und EP-A-894107 offenbarten Poly-spirobifluorene.

Vorzugsweise handelt es sich bei den konjugierten oder teilkonjugierten Polymeren auf Basis von Poly-para-phenylenen um die in WO 92/18552 offenbarten Poly-para-phenylene.

Vorzugsweise handelt es sich bei den konjugierten oder teilkonjugierten Polymeren auf Basis von Polythiophenen um die in EP-A-1028136 offenbarten Polythiophene.

Weiterhin können die erfindungsgemäßen Verbindungen auch durch die beispielsweise o. g. Reaktionstypen weiter funktionalisiert werden, und so zu erweiterten niedermolekularen Pd- oder Pt-Komplexen oder definierten Oligomeren (z. B. Dendrimeren) umgesetzt werden. Hier ist als Beispiel die Funktionalisierung mit Arylboronsäuren gem. SUZUKI oder mit Aminen gem. HARTWIG-BUCHWALD zu nennen.

Die halogenierten Komplexe bzw. die daraus erzeugten Polymere oder auch "erweiterten niedermolekularen Komplexe" oder auch die definierten Oligomeren, können in elektrischen oder elektronischen Bauelementen, beispielsweise als lichtemittierende Materialien in organischen oder polymeren Leuchtdioden (OLEDs bzw. PLEDs), eingesetzt werden. Es sind aber auch andere Anwendungen, beispielsweise in Organischen Solarzellen, Organischen Lasern, Organischen Photodetektoren, u. ä., denkbar.

Gegenstand der Erfindung sind daher auch elektronische Bauteile, wie z. B. Organische oder Polymere Leuchtdioden (OLEDs oder PLEDs), Organische Integrierte Schaltungen (O-ICs), Organische Feld-Effekt-Transistoren (O-FETs), Organische Dünnfilmtransistoren (OTFTs), Organische Solarzellen (O-SCs) oder Organische Laserdioden (O-Laser), enthaltend ein oder mehrere erfindungsgemäße halogenierte Palladium- oder Platinkomplexe oder ein oder mehrere erfindungsgemäße Polymere, die unter Verwendung dieser erfindungsgemäßen Palladium- oder Platinkomplexe erhalten wurden.

Die vorliegende Erfindung wird durch die folgenden Beispiele näher erläutert, ohne sie darauf beschränken zu wollen. Der Fachmann kann aus den Schilderungen ohne erfinderisches Zutun weitere erfindungsgemäße Komplexe herstellen bzw. das erfindungsgemäße Verfahren anwenden.

### Beispiele

### Synthese von symmetrisch und asymmetrisch funktionalisierten bis-orthometallierten Organo-Palladium- bzw. Organo-Platin-Verbindungen:

Die nachfolgenden Synthesen wurden - sofern nicht anders angegeben - an Luft unter Verwendung handelsüblicher Lösungsmittel durchgeführt. Die Edukte wurden von ALDRICH [N-Chlor-succinimid, N-Brom-succinimid, HCl, HBr, Hydrazinhydrat] bezogen. Vor der Verwendung der N-Halogen-Imide wurde der Gehalt an aktivem Halogen iodometrisch bestimmt [analog zu: K. W. Rosenmund, W. Kuhnhenn, Ber. **1923**, *56*, 1262]. Bis[2-(2-pyridinyl-κN)phenyl-κC]platin wurde nach Literaturmethoden (L. Chassot, E. Müller, A. Zelewsky, Inorg. Chem. **1984**, *23*, 4249-4253) dargestellt.

Numerierungsschema für die Zuordnung der ¹H-NMR-Signale [analog zu: C. Coudret, S. Fraysse, J.-P- Launay, Chem. Commun., **1998**, 663-664]:

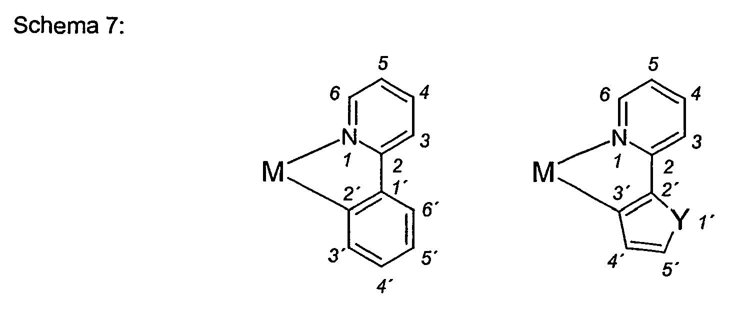

### Beispiel 1 : Bis[2-(2-pyridinyl-κN)(5-chlorphenyl-κC)]platin(II)

588 mg (4.4 mmol) N-Chlor-succinimid und 200 µl konz. HCl wurden unter Lichtausschluß zu einer gut gerührten Lösung von 504 mg (1.0 mmol) Bis[2-(2-pyridinyl-κN)phenyl-κC]platin(II) in 200 ml Dichlormethan gefügt. Die Reaktionsmischung wurde weitere 20 h bei Raumtemperatur gerührt. Anschließend wurden 240 µl (5 mmol) Hydrazinhydrat und 100 ml Ethanol zugefügt und die Mischung wurde 2 h unter Rückfluß erhitzt. Nach Einengen im Vakuum auf ein Volumen von 20 ml wurde die Lösung mit 200 ml Ethanol versetzt. Anschließend wurde der mikrokristalline Niederschlag abfiltriert (P4), dreimal mit 20 ml Ethanol gewaschen und dann im Vakuum (60°C, 10⁻⁴ mbar) getrocknet. Die Ausbeute - bei einer Reinheit von > 99.5% nach ¹H-NMR - betrug 501 mg entsprechend 87.5 %.
¹H-NMR (CD₂Cl₂): [ppm] = 8.91 (m, 3 H), 7.91 (m, 3 H), 7.83 (m, 3 H), 7.57 (m, 3 H), 7.43 (m, 3 H), 7.37 (m, 3 H), 7.09 (m, 3 H).

### Beispiel 2: Bis[2-(2-pyridinyl-κN)(5-bromphenyl-κC)]platin(II)

783 mg (4.4 mmol) N-Brom-succinimid und 170 µl 48 Gew.-%ige HBr wurden unter Lichtausschluß zu einer gut gerührten Lösung von 504 mg (1.0 mmol) Bis[2-(2-pyridinyl-κN)phenyl-κC]platin(II) in 200 ml Dichlormethan gefügt. Die Reaktionsmischung wurde weitere 20 h bei Raumtemperatur gerührt. Anschließend wurden 240 µl (5 mmol) Hydrazinhydrat und 100 ml Ethanol zugefügt und die Mischung wurde 2 h unter Rückfluß erhitzt. Nach Einengen im Vakuum auf ein Volumen von 20 ml wurde die Lösung mit 200 ml Ethanol versetzt. Anschließend wurde der mikrokristalline Niederschlag abfiltriert (P4), dreimal mit 20 ml Ethanol gewaschen und dann im Vakuum (60 °C, 10⁻⁴ mbar) getrocknet. Die Ausbeute - bei einer Reinheit von > 99.5% nach ¹H-NMR - betrug 613 mg entsprechend 92.7 %.
¹H-NMR (DMSO-d6): [ppm] = 8.85 (m, 3 H), 7.93 (m, 3 H), 7.78 (m, 3 H), 7.52 (m, 3 H), 7.39 (m, 3 H), 7.35 (m, 3 H), 7.02 (m, 3 H).

### Beispiel 3: Bis[2-(2-pyridinyl-κN)(5-bromphenyl-κC)platin(II)

783 mg (4.4 mmol) N-Brom-succinimid und 170 µl 48 Gew.-%ige HBr wurden unter Lichtausschluß zu einer gut gerührten Lösung von 504 mg (1.0 mmol) Bis[2-(2-pyridinyl-κN)phenyl-κC]platin(II) in 200 ml Dichlormethan gefügt. Die Reaktionsmischung wurde weitere 20 h bei Raumtemperatur gerührt. Nach Einengen im Vakuum auf ein Volumen von 20 ml wurde die Lösung mit 200 ml Ethanol versetzt. Anschließend wurde der mikrokristalline Niederschlag abfiltriert (P4), dreimal mit 20 ml Ethanol gewaschen und dann im Vakuum (60 °C, 10⁻⁴ mbar) getrocknet. Die so erhaltene Platin(IV)-Verbindung wurde im Vakuum (ca. 5·10⁻⁴ mbar) bei einer Temperatur von 380 bis 410 °C sublimiert, wobei das Produkt (die gewünschte Platin(II)-Verbindung) als Sublimat anfiel. Die Ausbeute - bei einer Reinheit von > 99.5% nach ¹H-NMR- betrug 569 mg entsprechend 86.0 %.
¹H-NMR (DMSO-d6): [ppm] = 8.85 (m, 3 H), 7.93 (m, 3 H), 7.78 (m, 3 H), 7.52 (m, 3 H), 7.39 (m, 3 H), 7.35 (m, 3 H), 7.02 (m, 3 H).

## Patentansprüche

1. Verbindung gemäß Formel (1) und (2), 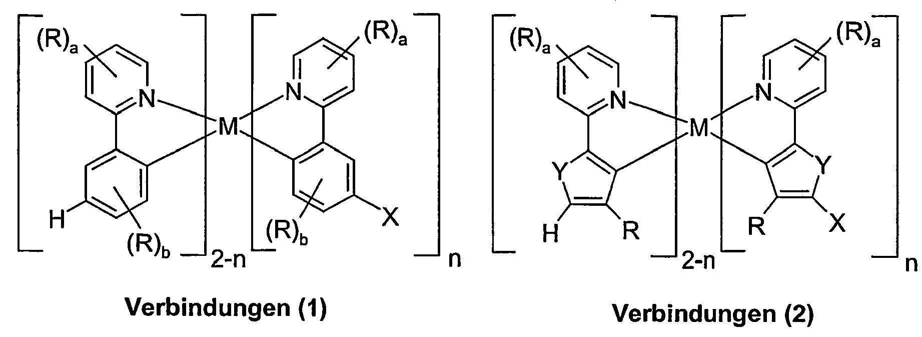 wobei die Symbole und Indizes folgende Bedeutung haben:
M Pd, Pt;
X Cl, Br, I;
Y O, S, Se, NR¹;
R ist gleich oder verschieden bei jedem Auftreten H, F, Cl, Br, I, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
R¹ sind gleich oder verschieden bei jedem Auftreten H oder ein aliphatischer oder aromatischer Kohlenwasserstoffrest mit 1 bis 20 C-Atomen;
a ist 0, 1, 2, 3 oder 4;
b ist 0, 1, 2 oder 3;
n ist 1 oder 2.

2. Verbindung gemäß Formel (1a) und (2a) 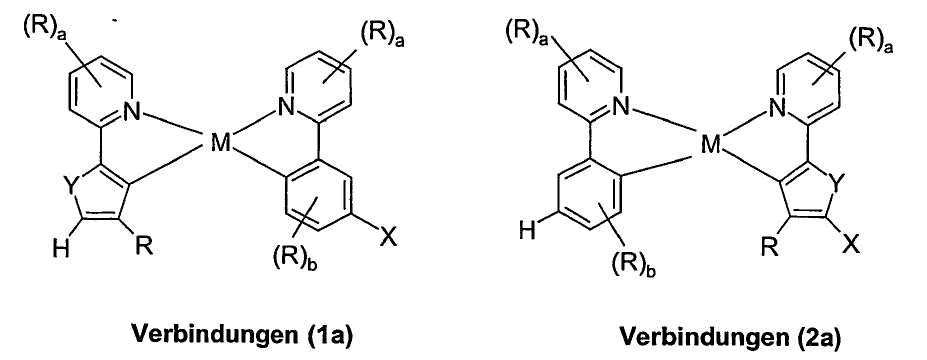 wobei die Symbole und Indizes folgende Bedeutung haben:
M Pd, Pt;
X Cl, Br, I;
Y O, S, Se, NR¹;
R ist gleich oder verschieden bei jedem Auftreten H, F, Cl, Br, I, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder-CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
R¹ sind gleich oder verschieden bei jedem Auftreten H oder ein aliphatischer oder aromatischer Kohlenwasserstoffrest mit 1 bis 20 C-Atomen;
a ist 0, 1, 2, 3 oder 4;
b ist 0, 1, 2 oder 3.

3. Verbindung gemäß Formel (3) und (4), 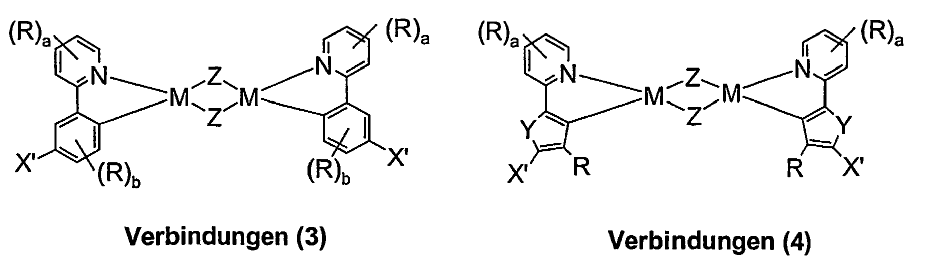 wobei die Symbole und Indizes folgende Bedeutung haben:
M Pd, Pt;
X' H, Cl, Br oder I, mit der Maßgabe, daß pro Formel für mindestens ein X' gilt, daß es aus Cl, Br oder I ausgewählt ist;
Y O, S, Se, NR¹;
Z ist gleich F, Cl, Br, I, O-R¹, S-R¹, N(R¹)₂
R ist gleich oder verschieden bei jedem Auftreten H, F, Cl, Br, I, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
R¹ sind gleich oder verschieden bei jedem Auftreten H oder ein aliphatischer oder aromatischer Kohlenwasserstoffrest mit 1 bis 20 C-Atomen;
a ist 0, 1, 2, 3 oder 4;
b ist 0, 1, 2 oder 3.

4. Verbindung gemäß Formel (5), (6), (7) und (8), 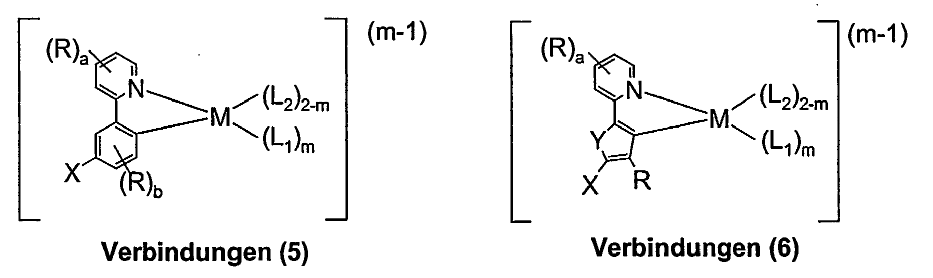 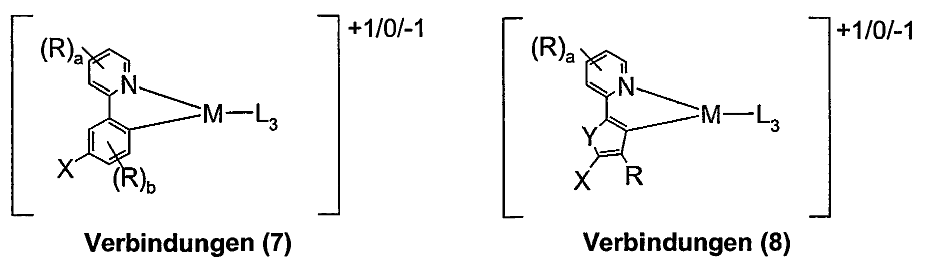 wobei die Symbole und Indizes folgende Bedeutung haben:
M Pd, Pt;
X Cl, Br, I;
Y O, S, Se, NR¹;
R ist gleich oder verschieden bei jedem Auftreten H, F, Cl, Br, I, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
R¹ sind gleich oder verschieden bei jedem Auftreten H oder ein aliphatischer oder aromatischer Kohlenwasserstoffrest mit 1 bis 20 C-Atomen;
L₁ ist ein neutraler, einzähniger Ligand;
L₂ ist ein monoanionischer, einzähniger Ligand;
L₃ ist ein neutraler oder mono- oder dianionischer zweizähniger Ligand;
a ist 0, 1, 2, 3 oder 4;
b ist 0, 1, 2 oder 3;
m ist 0, 1 oder 2.

5. Verbindungen gemäß Anspruch 4 **dadurch gekennzeichnet, daß** L₁ für Kohlenmonoxid, Isonitril insbesondere tert-Butyl-isonitril, Cyclohexylisonitril, Adamantylisonitril, ein Amin, insbesondere Trimethylamin, Triethylamin, Morpholin, aliphatische, aromatische oder heteroaromatische Phosphine, insbesondere Trimethylphosphin, Tricyclohexylphosphin, Dicyclohexylphenylphosphin, Tri-o-tolyl-phosphin, Tri-*tert*-butylphosphin, Triphenylphosphin, Tris(pentafluorphenyl)phosphin oder Trifluorphosphin, Phosphite, insbesondere Trimethylphosphit, Triethylphosphit, Arsine, insbesondere Trifluorarsin, Trimethylarsin, Tricyclohexylarsin, Tri-*tert*-butylarsin, Triphenylarsin, Tris(pentafluorphenyl)arsin, Stibine, insbesondere Trifluorstibin, Trimethylstibin, Tricyclohexylstibin, Tri-tert-butylstibin, Triphenylstibin, Tris(pentafluorphenyl)stibin oder ein stickstoffhaltiger Heterocyclus, insbesondere Pyridin, Pyridazin, Pyrazin, Triazin, steht.

6. Verbindungen gemäß Anspruch 4 **dadurch gekennzeichnet, daß** L₂ ein Halogenid, insbesondere F, Cl, Br, I, oder Cyanid, Cyanat, Iso-cyanat, Thiocyanat, Iso-thiocyanat, ein Alkoholat, insbesondere Methanolat, Ethanolat, Propanolat, *iso*-Propanolat, *tert*-Butylat, Phenolat, ein Thioalkoholat, insbesondere Methanthiolat, Ethanthiolat, Propanthiolat, iso-Propanthiolat, *tert*-Thiobutylat, Thiophenolat, ein Amid, insbesondere Dimethylamid, Diethylamid, Di-*iso*-propylamid, ein Carboxyalat, insbesondere Acetat, Trifluoracetat, Propionat, Benzoat oder ein anionischer stickstoffhaltiger Heterocyclus, insbesondere Morpholid, Pyrrolid, Imidazolid, Pyrazolid, ist.

7. Verbindungen gemäß Anspruch 4 **dadurch gekennzeichnet, daß** L₃ ein Diamin, insbesondere Ethylendiamin, N,N,N',N'-Tetramethylethylendiamin, Propylendiamin, N,N,N',N'-Tetramethylpropylendiamin, cis-, trans-Diaminocyclohexan, cis-, trans-N,N,N',N'-Tetramethyldiaminocyclohexan, Imine, insbesondere 2[(1-(Phenylimino)ethyl]pyridin, 2[(1-(2-Methylphenylimino)ethyl]pyridin, 2[(1-(2,6-Di-iso-propylphenylimino)ethyl]pyridin, 2[(1-(Methylimino)ethyl]pyridin, 2[(1-(ethylimino)ethyl]pyridin, 2[(1-(Iso-Propylimino)ethyl]pyridin, *2*[(1-(*Tert*-Butylimino)ethyl]pyridin, Diimine, insbesondere 1,2-Bis(methylimino)ethan, 1,2-Bis(ethylimino)ethan, 1,2-Bis(*iso*-propylimino)ethan, 1,2-Bis(*tert*-butylimino)ethan, 2,3-Bis(methylimino)butan, 2,3-Bis(ethylimino)butan, 2,3-Bis(iso-propylimino)butan, 2,3-Bis(*tert*-butylimino)butan, 1,2-Bis(phenylimino)ethan, 1,2-Bis(2-methylphenylimino)ethan, 1,2-Bis(2,6-di-iso-propylphenylimino)ethan, 1,2-Bis(2,6-di-*tert-*butylphenylimino)ethan, 2,3-Bis(phenylimino)butan, 2,3-Bis(2-methylphenylimino)butan, 2,3-Bis(2,6-di-*iso*-propylphenylimino)butan, 2,3-Bis(2,6-di-*tert*-butylphenylimino)butan, Heterocylen enthaltend zwei Stickstoffatome, insbesondere B. 2,2'-Bipyridin, o-Phenanthrolin, Diphosphine, insbesondere Bis-diphenylphosphinomethan, Bis-diphenylphosphinoethan, Bis(diphenylphosphino)propan, Bis(dimethylphosphino)methan, Bis(dimethylphosphino)ethan, Bis(dimethylphosphino)propan, Bis(diethylphosphino)methan, Bis(diethylphosphino)ethan, Bis(diethylphosphino)propan, Bis(di-*tert* butylphosphino)methan, Bis(di-*tert*-butylphosphino)ethan, Bis(*tert*-butylphosphino)propan, 1,3-Diketonate abgeleitet von 1,3-Diketonen, insbesondere Acetylaceton, Benzoylaceton, 1,5-Diphenylacetylaceton, Dibenzolymethan, Bis(1,1,1-tri-fluoracetyl)methan, 3-Ketonate abgeleitet von 3-Ketoestern, insbesondere Acetessigsäureethylester, Carboxylate abgeleitet von Aminocarbonsäuren, insbesondere Pyridin-2-carbonsäure, Chinolin-2-carbonsäure, Glycin, Dimethylglycin, Alanin, Dimethylaminoalanin, Salicyliminate abgeleitet von Salicyliminen, insbesondere Methylsalicylimin, Ethylsalicylimin, Phenylsalicylimin, Dialkoholate abgeleitet von Dialkoholen, insbesondere Ethylenglykol, 1,3-Propylenglykol, Dithiolate abgeleitet von Dithiolen, insbesondere 1,2-Ethylendithiol, 1,3-Propylendithiol, Heteroarylborat, insbesondere Tetrakis(1-imidazolyl)borat, Tetrakis(1-pyrazolyl)borat, ist.

8. Verfahren zur Herstellung der Verbindungen definiert in Anspruch 1, durch Umsetzung der Verbindungen (9) bzw. (10), 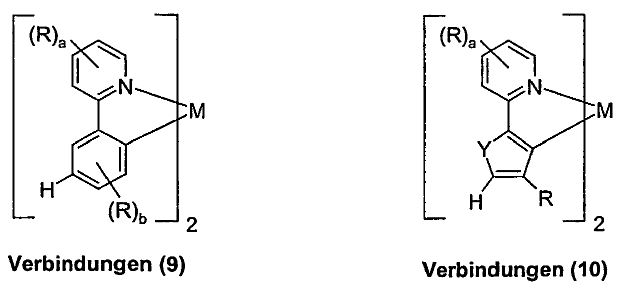 worin M und die Reste und Indizes Y, R, R¹, a, und b die in Anspruch 1 genannten Bedeutungen haben, mit Halogenierungsagenzien und nachfolgender Reduktion.

9. Verfahren zur Herstellung der Verbindungen definiert in Anspruch 3,
durch Umsetzung der Verbindungen (11) bzw. (12), 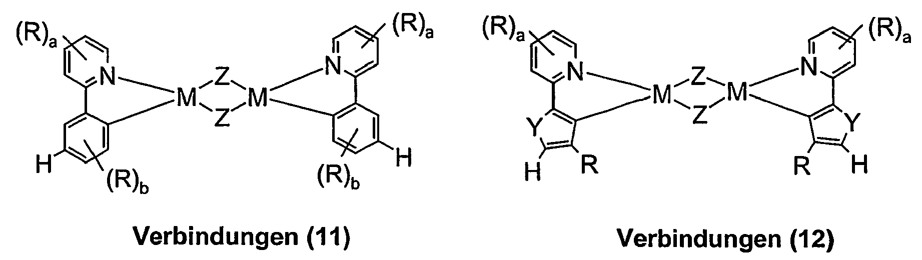 worin M und die Reste und Indizes Z, Y, R, R¹, a, und b die in Anspruch 3 genannten Bedeutungen haben, mit Halogenierungsagenzien und nachfolgender Reduktion.

10. Verfahren zur Herstellung der Verbindungen definiert in Anspruch 4, durch Umsetzung der Verbindungen (13), (14), (15) bzw. (16), 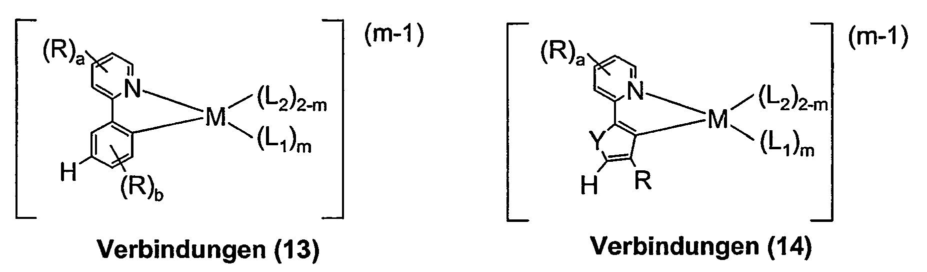 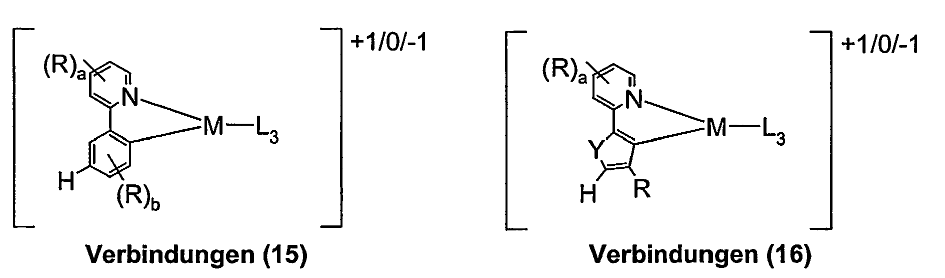 worin M und die Reste und Indizes L₁, L₂, L₃, Y, R, R¹, a, b und m die oben genannten Bedeutungen haben, mit Halogenierungsagenzien und nachfolgender Reduktion.

11. Verfahren gemäß einem oder mehreren der Ansprüche 8 bis 10, **dadurch gekennzeichnet, daß** als Halogenierungsagens ein Halogen X₂ oder ein Interhalogen X-X und eine Base im molaren Verhältnis 1 : 1 bis 1 : 100 oder ein organischer Bromkomplex, wie Pyridiniumperbromid, und jeweils gegebenenfalls eine Lewis-Säure im molaren Verhältnis (Halogen zu Lewissäure) von 1 : 0.1 bis 1 : 0.0001 verwendet wird.

12. Verfahren gemäß einem oder mehreren der Ansprüche 8 bis 10, **dadurch gekennzeichnet, daß** als Halogenierungsagens eine organische N-Hal-Verbindung verwendet wird.

13. Verfahren gemäß einem oder mehreren der Ansprüche 8 bis 10 , **dadurch gekennzeichnet, daß** als Halogenierungsagens organische O-Hal-Verbindungen und Halogene X₂ im molaren Verhältnis von 0.5 : 1 bis 1 : 1 verwendet werden.

14. Verfahren gemäß einem oder mehreren der Ansprüche 8 bis 10 , **dadurch gekennzeichnet, daß** ein stöchiometrisches Verhältnis der Halogenierungsagenzien gemäß den Ansprüchen 11 bis 13 - bezogen auf den Gehalt an aktivem Halogen - zu den Verbindungen (9), (10), (11), (12), (13), (14), (15) oder (16) von 2 : 1 verwendet wird.

15. Verfahren gemäß einem oder mehreren der Ansprüche 8 bis 10, **dadurch gekennzeichnet, daß** ein stöchiometrisches Verhältnis der Halogenierungsagenzien gemäß den Ansprüchen 11 bis 13 - bezogen auf den Gehalt an aktivem Halogen - zu den Verbindungen (9), (10), (11), (12), (13), (14), (15) oder (16) von 3 : 1 bis 1000 : 1 verwendet wird.

16. Verfahren gemäß einem oder mehreren der Ansprüche 8 bis 15, **dadurch gekennzeichnet, dass** der Reaktionsmischung ein Reduktionsmittel im molaren Verhältnis von 1 : 1 bis 10000 : 1 bezogen auf die Verbindungen (9), (10), (11), (12), (13), (14), (15) oder (16) zugesetzt wird und der Zusatz dabei zeitgleich mit dem Zusatz der Halogenierungsagenzien (I), (II) bzw. (III) oder zeitlich verzögert zu diesem erfolgt.

17. Verfahren gemäß einem oder mehreren der Ansprüche 8 bis 16, **dadurch gekennzeichnet , dass** als Reduktionsmittel Hydrazin(hydrat) bzw. dessen Salze, Hydroxylamin bzw. dessen Salze, Hydroxylamin-O-sulfonsäure und Hydrochinone, Alkalimetall- und Erdalkalimetallsulfite, Alkalimetall- und Erdalkalimetalldithionite, Alkali- und Erdalkalimetalle und ihre Amalgame und andere entsprechende Legierungen, Übergangsmetalle wie Mangan, Eisen, Nickel und Zink und Übergangsmetalllegierungen eingesetzt werden.

18. Verfahren gemäß einem oder mehreren der Ansprüche 8 bis 15, **dadurch gekennzeichnet, daß** die Reduktion auch durch trockenes Erhitzen der intermediär gebildeten und in Substanz isolierten Palladium(IV)- bzw. Platin(VI)-Verbindungen im Vakuum erfolgt.

19. Verbindungen gemäß einem oder mehreren der Ansprüche 1 bis 4 , **dadurch gekennzeichnet, daß** ihre Reinheit (mittels 1 H-NMR bzw. HPLC bestimmt) mehr als 99% beträgt.

20. Konjugierte, teilkonjugierte oder nicht-konjugierte Polymere enthaltend eine oder mehrere Verbindungen der Formel (1') und/oder (2') 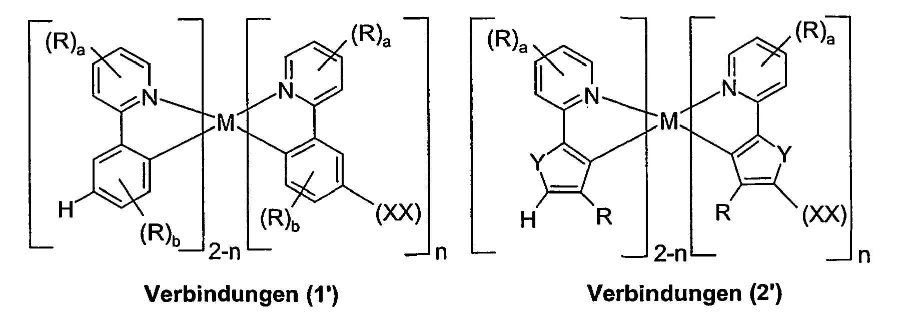 und/oder der Formel (1a') und/oder (2a') 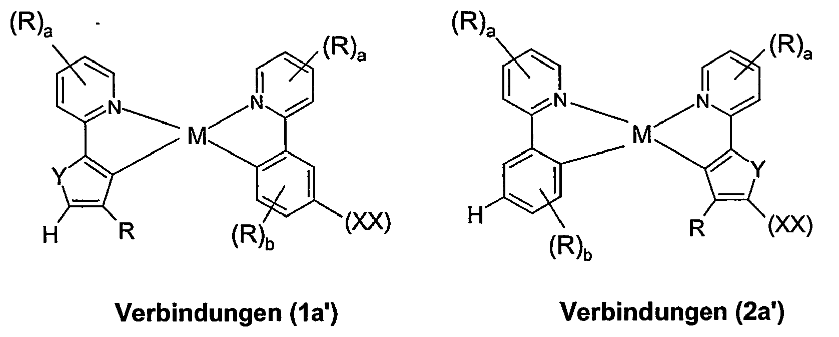 und/oder der Formel (3'), (4'), (5'), (6'), (7') und/oder (8'), 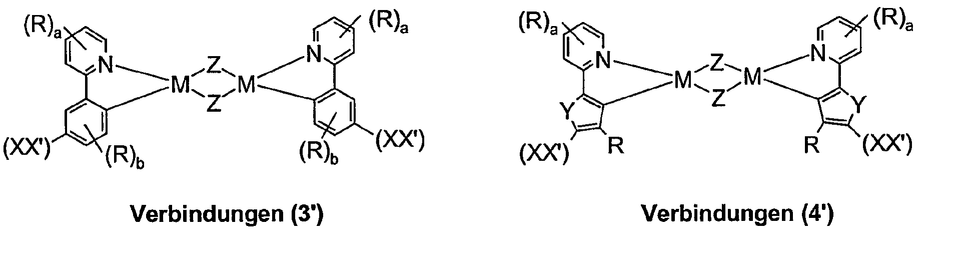 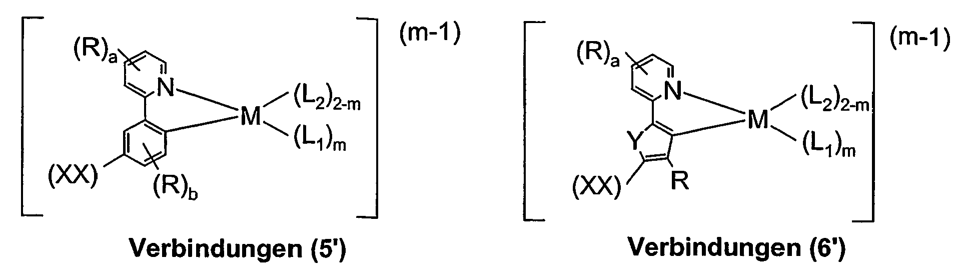 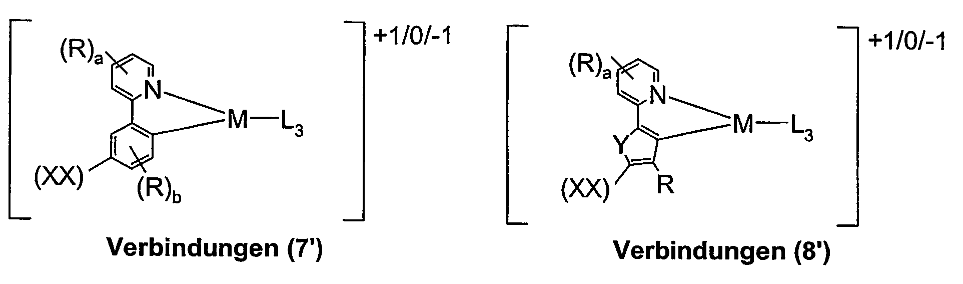 wobei die Symbole und Indizes folgende Bedeutung haben:
M Pd, Pt;
Y O, S, Se, NR¹;
R ist gleich oder verschieden bei jedem Auftreten H, F, Cl, Br, I, NO₂, CN, eine geradkettige oder verzweigte oder cyclische Alkyl- oder Alkoxygruppe mit 1 bis 20 C-Atomen, wobei ein oder mehrere nicht benachbarte CH₂-Gruppen durch -O-, -SiR¹₂-, -S-, -NR¹- oder -CONR¹- ersetzt sein können und wobei ein oder mehrere H-Atome durch F ersetzt sein können, oder eine Aryl- oder Heteroarylgruppe mit 4 bis 14 C-Atomen, die durch einen oder mehrere, nicht aromatische Reste R substituiert sein kann, wobei mehrere Substituenten R, sowohl am selben Ring als auch an den beiden unterschiedlichen Ringen zusammen wiederum ein weiteres aliphatisches oder aromatisches, mono- oder polycyclisches Ringsystem aufspannen können;
R¹ sind gleich oder verschieden bei jedem Auftreten, H oder ein aliphatischer oder aromatischer Kohlenwasserstoffrest mit 1 bis 20 C-Atomen;
L₁ ist ein neutraler, einzähniger Ligand;
L₂ ist ein monoanionischer, einzähniger Ligand;
L₃ ist ein neutraler oder mono- oder dianionischer zweizähniger Ligand;
a ist 0, 1, 2, 3 oder 4;
b ist 0, 1, 2 oder 3;
m ist 0, 1 oder 2;
n ist 1 oder 2;
(XX) eine Bindung zum konjugierten, teilkonjugierten oder nicht-konjugierten Polymer darstellt;
(XX') H oder eine Bindung zum konjugierten, teilkonjugierten oder nichtkonjugierten Polymer darstellt, aber pro Formel mindestens ein (XX') eine Bindung zum konjugierten, teilkonjugierten oder nicht-konjugierten Polymer darstellt.

21. Polymere gemäß Anspruch 20, **dadurch gekennzeichnet, daß** diese unter Verwendung einer oder mehrerer Verbindungen gemäß Formel (1), (1a), (2), (2a) und/oder (3) bis (8) definiert in den Ansprüchen 1 bis 4 erhalten wurden.

22. Polymere gemäß den Ansprüchen 20 und/oder 21, **dadurch gekennzeichnet, daß** das Polymer Wiederholeinheiten entnommen aus Polyfluorenen, Poly-spirobifluorenen, Poly-para-phenylenen, Poly-carbazolen oder Polythiophenen enthält.

23. Polymere gemäß einem oder mehreren der Ansprüche 20 bis 22, **dadurch gekennzeichnet, daß** das Polymer ein Homo- oder Copolymer ist.

24. Polymere gemäß einem oder mehreren der Ansprüche 20 bis 23, **dadurch gekennzeichnet, daß** das Polymer in organischen Lösemitteln löslich ist.

25. Elektronisches Bauteil enthaltend mindestens eine Verbindung gemäß einem oder mehreren der Ansprüche 1 bis 4.

26. Elektronisches Bauteil enthaltend mindestens ein Polymer gemäß einem oder mehreren der Ansprüche 20 bis 24.

27. Elektronisches Bauteil gemäß Anspruch 25 und/oder Anspruch 26, **dadurch gekennzeichnet, daß** es sich um organische oder polymere Leuchtdioden (OLEDs oder PLEDs), organische integrierte Schaltungen (O-ICs); organische Feld-Effekt-Transistoren (OFETS), organische Dünnfilmtransistoren (OTFTs), organische Solarzellen (O-SCs) oder organische Laserdioden (O-Laser) handelt.

## Claims

1. Compound of the formula (1) or (2) 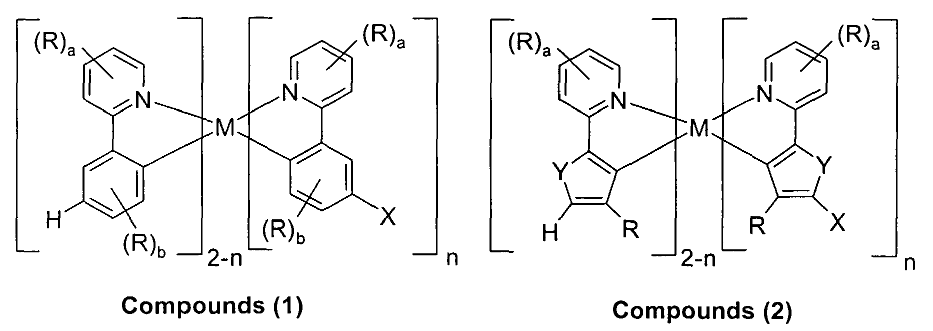 where the symbols and indices have the following meaning:
M denotes Pd, Pt;
X denotes Cl, Br, I;
Y denotes O, S, Se, NR¹;
R is, identically or differently on each occurrence, H, F, Cl, Br, I, NO₂, CN, a straight-chain or branched or cyclic alkyl or alkoxy group having 1 to 20 C atoms, in which one or more non-adjacent CH₂ groups may be replaced by -O-, -SiR¹₂-, -S-, -NR¹- or -CONR¹- and in which one or more H atoms may be replaced by F, or an aryl or heteroaryl group having 4 to 14 C atoms, which may be substituted by one or more non-aromatic radicals R, where a plurality of substituents R, both on the same ring and also on the two different rings, may together in turn define a further aliphatic or aromatic, mono- or polycyclic ring system;
R¹ are, identically or differently on each occurrence, H or an aliphatic or aromatic hydrocarbon radical having 1 to 20 C atoms;
a is 0, 1, 2, 3 or 4;
b is 0, 1, 2 or 3;
n is 1 or 2.

2. Compound of the formula (1a) or (2a) 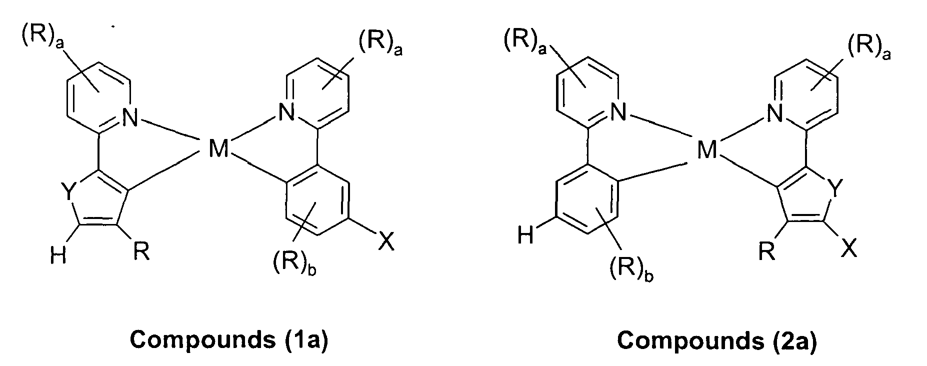 where the symbols and indices have the following meaning:
M denotes Pd, Pt;
X denotes Cl, Br, I;
Y denotes O, S, Se, NR¹;
R is, identically or differently on each occurrence, H, F, Cl, Br, I, NO₂, CN, a straight-chain or branched or cyclic alkyl or alkoxy group having 1 to 20 C atoms, in which one or more non-adjacent CH₂ groups may be replaced by -O-, -SiR¹₂-, -S-, -NR¹- or -CONR¹- and in which one or more H atoms may be replaced by F, or an aryl or heteroaryl group having 4 to 14 C atoms, which may be substituted by one or more non-aromatic radicals R, where a plurality of substituents R, both on the same ring and also on the two different rings, may together in turn define a further aliphatic or aromatic, mono- or polycyclic ring system;
R¹ are, identically or differently on each occurrence, H or an aliphatic or aromatic hydrocarbon radical having 1 to 20 C atoms;
a is 0, 1, 2, 3 or 4;
b is 0, 1, 2 or 3.

3. Compound of the formula (3) or (4) 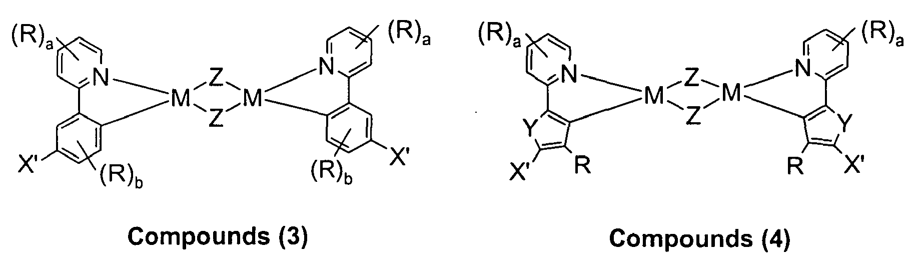 where the symbols and indices have the following meaning:
M denotes Pd, Pt;
X' denotes H, Cl, Br or I, with the proviso that at least one X' per formula is selected from Cl, Br or I;
Y denotes O, S, Se, NR¹;
Z is equal to F, Cl, Br, I, O-R¹, S-R¹, N(R¹)₂;
R is, identically or differently on each occurrence, H, F, Cl, Br, I, NO₂, CN, a straight-chain or branched or cyclic alkyl or alkoxy group having 1 to 20 C atoms, in which one or more non-adjacent CH₂ groups may be replaced by -O-, -SiR¹₂-, -S-, -NR¹- or -CONR¹- and in which one or more H atoms may be replaced by F, or an aryl or heteroaryl group having 4 to 14 C atoms, which may be substituted by one or more non-aromatic radicals R, where a plurality of substituents R, both on the same ring and also on the two different rings, may together in turn define a further aliphatic or aromatic, mono- or polycyclic ring system;
R¹ are, identically or differently on each occurrence, H or an aliphatic or aromatic hydrocarbon radical having 1 to 20 C atoms;
a is 0, 1, 2, 3 or 4;
b is 0, 1, 2 or 3.

4. Compound of the formula (5), (6), (7) or (8) 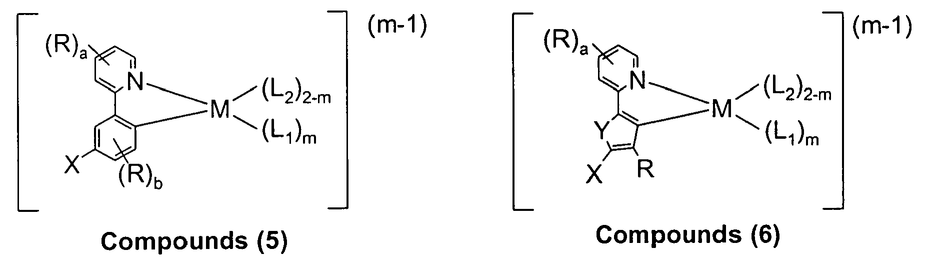 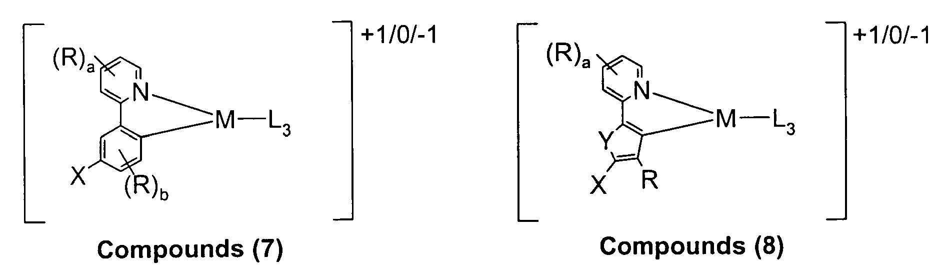 where the symbols and indices have the following meaning:
M denotes Pd, Pt;
X denotes Cl, Br, I;
Y denotes O, S, Se, NR¹;
R is, identically or differently on each occurrence, H, F, Cl, Br, I, NO₂, CN, a straight-chain or branched or cyclic alkyl or alkoxy group having 1 to 20 C atoms, in which one or more non-adjacent CH₂ groups may be replaced by -O-, -SiR¹₂-, -S-, -NR¹- or -CONR¹- and in which one or more H atoms may be replaced by F, or an aryl or heteroaryl group having 4 to 14 C atoms, which may be substituted by one or more non-aromatic radicals R, where a plurality of substituents R, both on the same ring and also on the two different rings, may together in turn define a further aliphatic or aromatic, mono- or polycyclic ring system;
R¹ are, identically or differently on each occurrence, H or an aliphatic or aromatic hydrocarbon radical having 1 to 20 C atoms;
L₁ is a neutral, monodentate ligand;
L₂ is a monoanionic, monodentate ligand;
L₃ is a neutral or mono- or dianionic bidentate ligand;
a is 0, 1, 2, 3 or 4;
b is 0, 1, 2 or 3;
m is 0, 1 or 2.

5. Compounds according to Claim 4, **characterised in that** L₁ stands for carbon monoxide, isonitrile, in particular tert-butylisonitrile, cyclohexylisonitrile, adamantylisonitrile, an amine, in particular trimethylamine, triethylamine, morpholine, aliphatic, aromatic or heteroaromatic phosphines, in particular trimethylphosphine, tricyclohexylphosphine, dicyclohexylphenylphosphine, tri-o-tolylphosphine, tri-*tert*-butylphosphine, triphenylphosphine, tris(pentafluorophenyl)phosphine or trifluorophosphine, phosphites, in particular trimethyl phosphite, triethyl phosphite, arsines, in particular trifluoroarsine, trimethylarsine, tricyclohexylarsine, tri-*tert-*butylarsine, triphenylarsine, tris(pentafluorophenyl)arsine, stibines, in particular trifluorostibine, trimethylstibine, tricyclohexylstibine, tri-tert-butylstibine, triphenylstibine, tris(pentafluorophenyl)stibine or a nitrogen-containing heterocycle, in particular pyridine, pyridazine, pyrazine, triazine.

6. Compounds according to Claim 4, **characterised in that** L₂ is a halide, in particular F, Cl, Br, I, or cyanide, cyanate, isocyanate, thiocyanate, isothiocyanate, an alkoxide, in particular methoxide, ethoxide, propoxide, isopropoxide, *tert*-butoxide, phenoxide, a thioalkoxide, in particular methanethiolate, ethanethiolate, propanethiolate, isopropanethiolate, *tert*-thiobutylate, thiophenolate, an amide, in particular dimethylamide, diethylamide, diisopropylamide, a carboxylate, in particular acetate, trifluoroacetate, propionate, benzoate or an anionic nitrogen-containing heterocycle, in particular morpholide, pyrrolide, imidazolide, pyrazolide.

7. Compounds according to Claim 4, **characterised in that** L₃ is a diamine, in particular ethylenediamine, N,N,N',N'-tetramethylethylenediamine, propylenediamine, N,N,N',N'-tetramethylpropylenediamine, cis-, trans-diaminocyclohexane, cis-, trans-N,N,N',N'-tetramethyldiaminocyclohexane, imines, in particular 2[(1-(phenylimino)ethyl]pyridine, 2[(1-(2-methylphenylimino)ethyl]pyridine, 2[(1-(2,6-diisopropylphenylimino)ethyl]pyridine, 2[(1-(methylimino)ethyl]pyridine, 2[(1-(ethylimino)ethyl]pyridine, 2[(1-(isopropylimino)ethyl]-pyridine, 2[(1-(*tert*-butylimino)ethyl]pyridine, diimines, in particular 1,2-bis(methylimino)-ethane, 1,2-bis(ethylimino)ethane, 1,2-bis(isopropylimino)ethane, 1,2-bis(*tert*-butylimino)-ethane, 2,3-bis(methylimino)butane, 2,3-bis(ethylimino)butane, 2,3-bis(isopropylimino)-butane, 2,3-bis(*tert*-butylimino)butane, 1,2-bis(phenylimino)ethane, 1,2-bis(2-methylphenylimino)ethane, 1,2-bis(2,6-diisopropylphenylimino)ethane, 1,2-bis(2,6-di-*tert*-butylphenylimino)ethane, 2,3-bis(phenylimino)butane, 2,3-bis(2-methylphenylimino)butane, 2,3-bis(2,6-diisopropylphenylimino)butane, 2,3-bis(2,6-di-*tert*-butylphenylimino)butane, heterocycles containing two nitrogen atoms, in particular 2,2'-bipyridine, o-phenanthroline, diphosphines, in particular bis-diphenylphosphinomethane, bis-diphenylphosphinoethane, bis(diphenylphosphino)propane, bis(dimethylphosphino)methane, bis(dimethylphosphino)ethane, bis-(dimethylphosphino)propane, bis(diethylphosphino)methane, bis(diethylphosphino)ethane, bis(diethylphosphino)propane, bis(di-*tert*-butylphosphino)methane, bis(di-*tert*-butylphosphino)ethane, bis(*tert*-butylphosphino)propane, 1,3-diketonates derived from 1,3-diketones, in particular acetylacetone, benzoylacetone, 1,5-diphenylacetylacetone, dibenzoylmethane, bis(1,1,1-trifluoroacetyl)methane, 3-ketonates derived from 3-ketoesters, in particular ethyl acetoacetate, carboxylates derived from aminocarboxylic acids, in particular pyridine-2-carboxylic acid, quinoline-2-carboxylic acid, glycine, dimethylglycine, alanine, dimethylaminoalanine, salicyliminates derived from salicylimines, in particular methylsalicylimine, ethylsalicylimine, phenylsalicylimine, dialcoholates derived from dialcohols, in particular ethylene glycol, 1,3-propylene glycol, dithiolates derived from dithiols, in particular 1,2-ethylenedithiol, 1,3-propylenedithiol, heteroarylborate, in particular tetrakis(1-imidazolyl)-borate, tetrakis(1-pyrazolyl)borate.

8. Process for the preparation of the compounds defined in Claim 1, by reaction of the compounds (9) or (10) 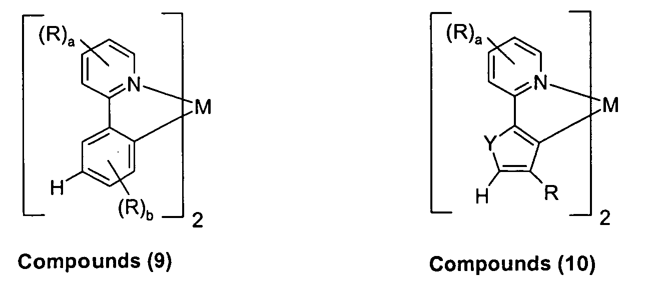 in which M and the radicals and indices Y, R, R¹, a and b have the meanings mentioned in Claim 1, with halogenating agents and subsequent reduction.

9. Process for the preparation of the compounds defined in Claim 3, by reaction of the compounds (11) or (12) 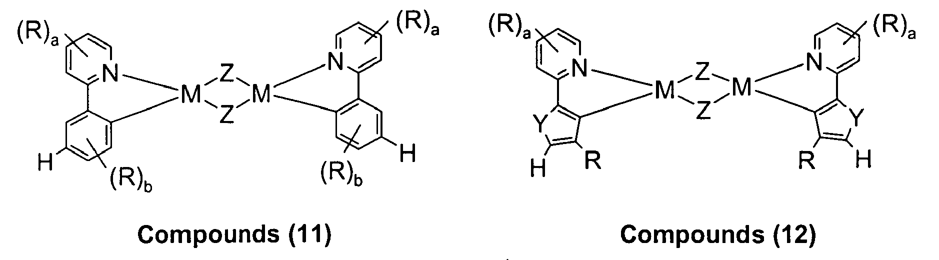 in which M and the radicals and indices Z, Y, R, R¹, a and b have the meanings mentioned in Claim 3, with halogenating agents and subsequent reduction.

10. Process for the preparation of the compounds defined in Claim 4, by reaction of the compounds (13), (14), (15) or (16) 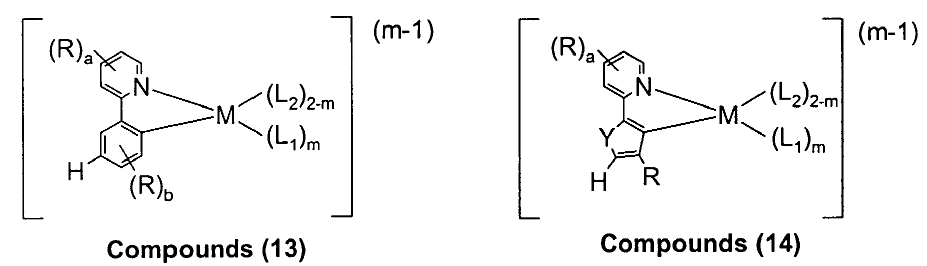 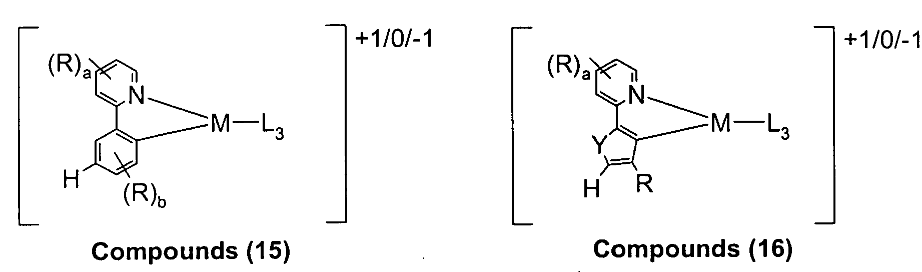 in which M and the radicals and indices L₁, L₂, L₃, Y, R, R¹, a, b and m have the abovementioned meanings, with halogenating agents and subsequent reduction.

11. Process according to one or more of Claims 8 to 10, **characterised in that** the halogenating agent used is a halogen X₂ or an interhalogen X-X and a base in the molar ratio 1:1 to 1:100 or an organic bromine complex, such as pyridinium perbromide, and in each case optionally a Lewis acid in the molar ratio (halogen to Lewis acid) 1:0.1 to 1:0.0001.

12. Process according to one or more of Claims 8 to 10, **characterised in that** the halogenating agent used is an organic N-Hal compound.

13. Process according to one or more of Claims 8 to 10, **characterised in that** the halogenating agent used is organic O-Hal compounds and halogens X₂ in the molar ratio 0.5:1 to 1:1.

14. Process according to one or more of Claims 8 to 10, **characterised in that** a stoichiometric ratio of the halogenating agents according to Claims 11 to 13 - based on the content of active halogen - to the compounds (9), (10), (11), (12), (13), (14), (15) or (16) of 2:1 is used.

15. Process according to one or more of Claims 8 to 10, **characterised in that** a stoichiometric ratio of the halogenating agents according to Claims 11 to 13 - based on the content of active halogen - to the compounds (9), (10), (11), (12), (13), (14), (15) or (16) of 3:1 to 1000:1 is used.

16. Process according to one or more of Claims 8 to 15, **characterised in that** a reducing agent is added to the reaction mixture in the molar ratio of 1:1 to 10,000:1, based on the compounds (9), (10), (11), (12), (13), (14), (15) or (16), and the addition is carried out at the same time as or after the addition of the halogenating agents (I), (II) or (III).

17. Process according to one or more of Claims 8 to 16, **characterised in that** the reducing agents employed are hydrazine (hydrate) or salts thereof, hydroxylamine or salts thereof, hydroxylamine-O-sulfonic acid and hydroquinones, alkali metal and alkaline earth metal sulfites, alkali metal and alkaline earth metal dithionites, alkali and alkaline earth metals and amalgams thereof and other corresponding alloys, transition metals, such as manganese, iron, nickel and zinc, and transition-metal alloys.

18. Process according to one or more of Claims 8 to 15, **characterised in that** the reduction is also carried out by dry heating of the palladium(IV) or platinum(VI) compounds formed as intermediates and isolated as such, under reduced pressure.

19. Compounds according to one or more of Claims 1 to 4, **characterised in that** their purity (determined by 1H-NMR or HPLC) is greater than 99%.

20. Conjugated, partially conjugated or non-conjugated polymers comprising one or more compounds of the formula (1') and/or (2') 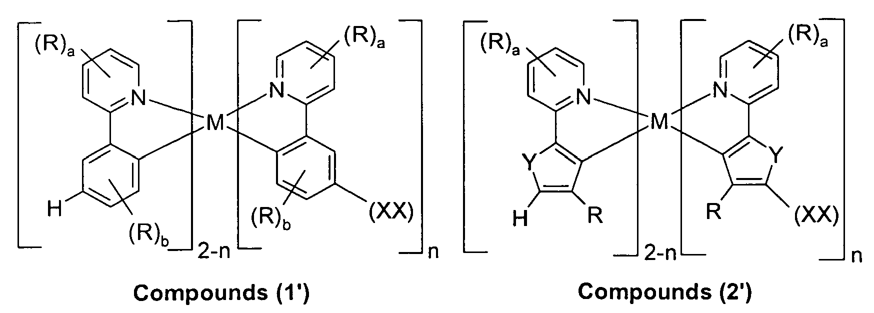 and/or of the formula (1a') and/or (2a') 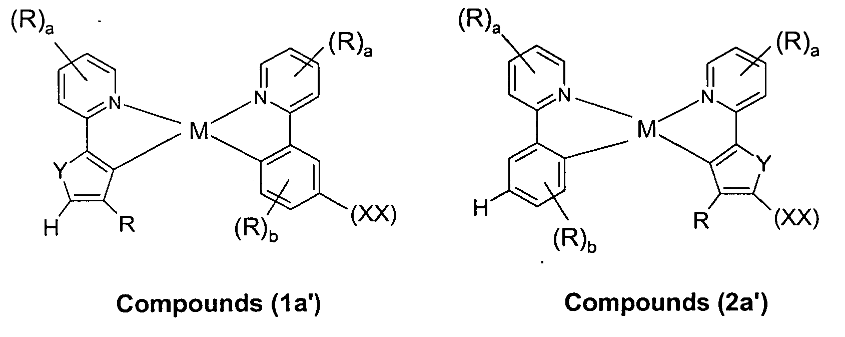 and/or of the formula (3'), (4'), (5'), (6'), (7') and/or (8') 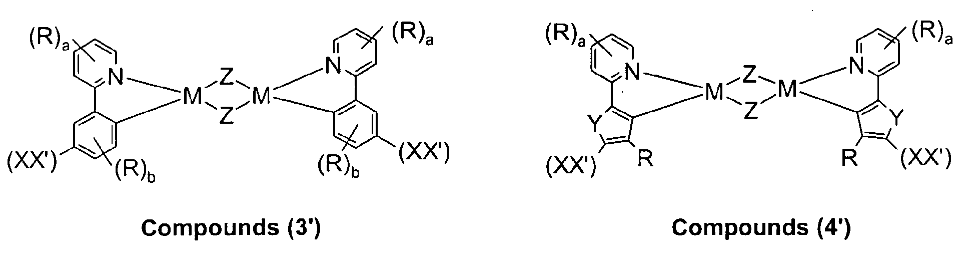 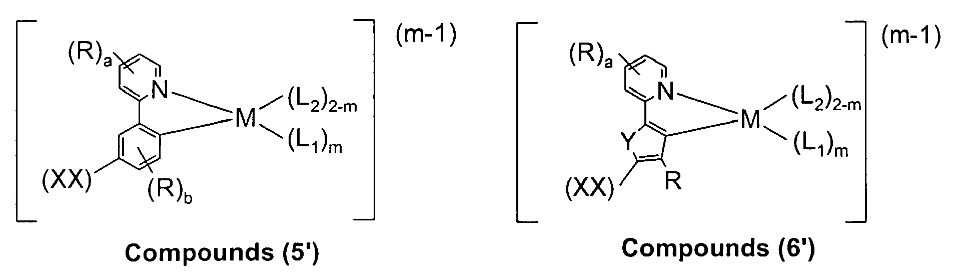 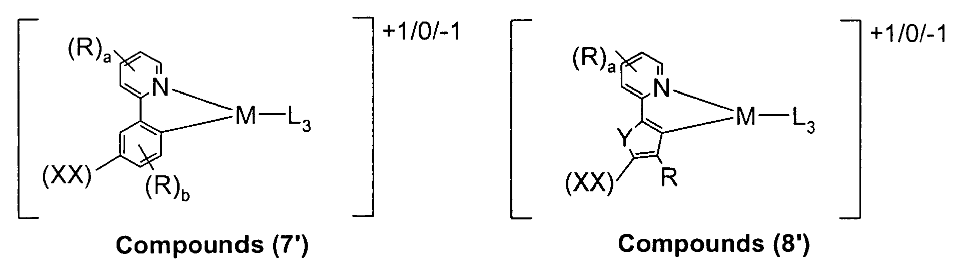 where the symbols and indices have the following meaning:
M denotes Pd, Pt;
Y denotes O, S, Se, NR¹;
R is, identically or differently on each occurrence, H, F, Cl, Br, I, NO₂, CN, a straight-chain or branched or cyclic alkyl or alkoxy group having 1 to 20 C atoms, in which one or more non-adjacent CH₂ groups may be replaced by -O-, -SiR¹₂-, -S-, -NR¹- or -CONR¹- and in which one or more H atoms may be replaced by F, or an aryl or heteroaryl group having 4 to 14 C atoms, which may be substituted by one or more non-aromatic radicals R, where a plurality of substituents R, both on the same ring and also on the two different rings, may together in turn define a further aliphatic or aromatic, mono- or polycyclic ring system;
R¹ are, identically or differently on each occurrence, H or an aliphatic or aromatic hydrocarbon radical having 1 to 20 C atoms;
L₁ is a neutral, monodentate ligand;
L₂ is a monoanionic, monodentate ligand;
L₃ is a neutral or mono- or dianionic bidentate ligand;
a is 0, 1, 2, 3 or 4;
b is 0, 1, 2 or 3;
m is 0, 1 or 2;
n is 1 or 2;
(XX) represents a bond to the conjugated, partially conjugated or non-conjugated polymer;
(XX') represents H or a bond to the conjugated, partially conjugated or non-conjugated polymer, but at least one (XX') per formula represents a bond to the conjugated, partially conjugated or non-conjugated polymer.

21. Polymers according to Claim 20, **characterised in that** they have been obtained using one or more compounds of the formula (1), (1a), (2), (2a) and/or (3) to (8) defined in Claims 1 to 4.

22. Polymers according to Claims 20 and/or 21, **characterised in that** the polymer comprises recurring units taken from polyfluorenes, polyspirobifluorenes, poly-para-phenylenes, poly-carbazoles or polythiophenes.

23. Polymers according to one or more of Claims 20 to 22, **characterised in that** the polymer is a homo- or copolymer.

24. Polymers according to one or more of Claims 20 to 23, **characterised in that** the polymer is soluble in organic solvents.

25. Electronic component comprising at least one compound according to one or more of Claims 1 to 4.

26. Electronic component comprising at least one polymer according to one or more of Claims 20 to 24.

27. Electronic component according to Claim 25 and/or Claim 26, **characterised in that** it is organic or polymeric light-emitting diodes (OLEDs or PLEDs), organic integrated circuits (O-ICs), organic field-effect transistors (OFETs), organic thin-film transistors (OTFTs), organic solar cells (O-SCs) or organic laser diodes (O-lasers).

## Revendications

1. Composé de la formule (1) ou (2) 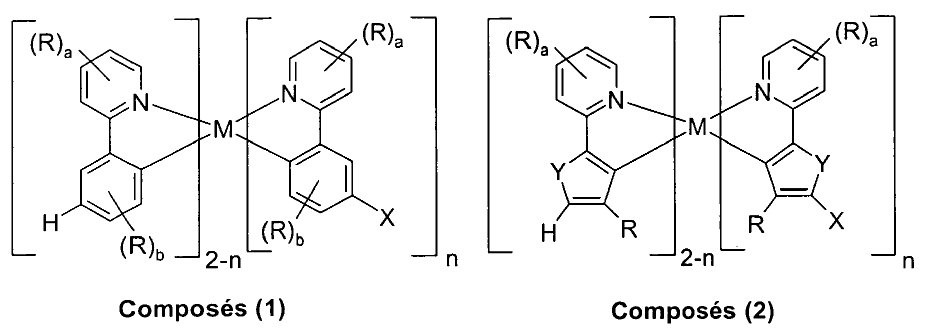 dans lesquelles les symboles et les indices présentent la signification qui suit :
M représente Pd, Pt ;
X représente CI, Br, I ;
Y représente O, S, Se, NR¹ ;
R est, de manière identique ou différente pour chaque occurrence, H, F, CI, Br, I, NO₂, CN, un groupe alkyle ou alcoxy en chaîne droite ou ramifié ou cyclique comportant de 1 à 20 atomes de C, où un ou plusieurs groupes CH₂ non adjacents peuvent être remplacés par -O-, -SiR¹₂-, -S-, -NR¹- ou -CONR¹- et où un ou plusieurs atomes de H peuvent être remplacés par F, ou un groupe aryle ou hétéroaryle comportant de 4, à 14 atomes de C, qui peut être substitué par un ou plusieurs radicaux non aromatiques R, où une pluralité de substituants R, à la fois sur le même anneau et également sur les deux anneaux différents, peuvent ensemble définir à leur tour un autre système d'anneaux monocyclique ou polycyclique aliphatique ou aromatique ;
R¹ sont, de manière identique ou différente pour chaque occurrence, H ou un radical hydrocarbone aliphatique ou aromatique comportant de 1 à 20 atomes de C;
a est 0, 1, 2, 3 ou 4 ;
b est 0, 1, 2 ou 3 ;
n est 1 ou 2.

2. Composé de la formule (1a) ou (2a) 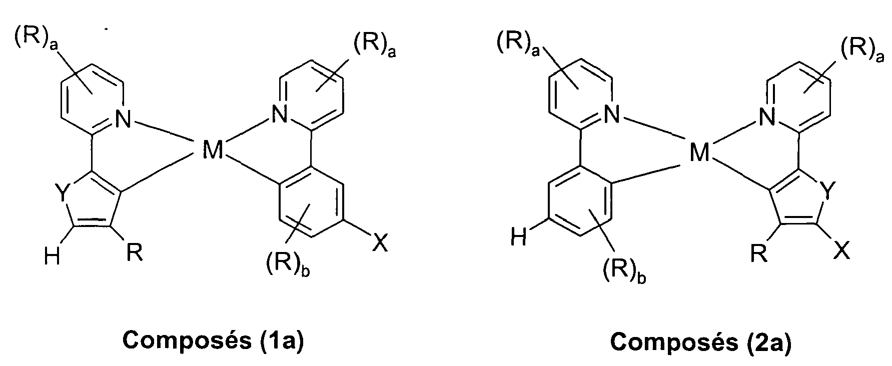 dans lesquelles les symboles et indices présentent la signification qui suit :
M représente Pd, Pt ;
X représente Cl, Br, I ;
Y représente O, S, Se, NR¹ ;
R est, de manière identique ou différente pour chaque occurrence, H, F, Cl, Br, I, NO₂, CN, un groupe alkyle ou alcoxy en chaîne droite ou ramifié ou cyclique comportant de 1 à 20 atomes de C, où un ou plusieurs groupes CH₂ non adjacents peuvent être remplacés par -O-, -SiR¹₂-, -S-, -NR¹- ou -CONR¹- et où un ou plusieurs atomes de H peuvent être remplacés par F, ou un groupe aryle ou hétéroaryle comportant de 4 à 14 atomes de C, qui peut être substitué par un ou plusieurs radicaux non aromatiques R, où une pluralité de substituants R, à la fois sur le même anneau et également sur les deux anneaux différents, peuvent ensemble définir à leur tour un autre système d'anneaux monocyclique ou polycyclique aliphatique ou aromatique ;
R¹ sont, de manière identique ou différente pour chaque occurrence, H ou un radical hydrocarbone aliphatique ou aromatique comportant de 1 à 20 atomes deC;
a est 0, 1, 2, 3 ou 4 ;
b est 0, 1, 2 ou 3.

3. Composé de la formule (3) ou (4) 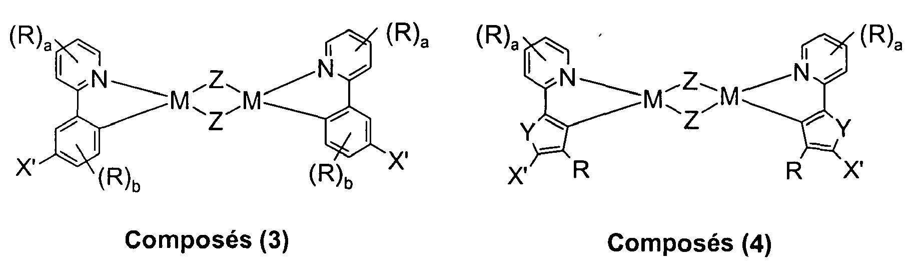 dans lesquelles les symboles et les indices présentent la signification qui suit :
M représente Pd, Pt ;
X' représente H, Cl, Br ou I, étant entendu qu'au moins un X' par formule est choisi parmi Cl, Br ou I ;
Y représente O, S, Se, NR¹ ;
Z est égal à F, CI, Br, I, O-R¹, S-R¹, N(R¹)₂ ;
R est, de manière identique ou différente pour chaque occurrence, H, F, Cl, Br, I, NO₂, CN, un groupe alkyle ou alcoxy en chaîne droite ou ramifié ou cyclique comportant de 1 à 20 atomes de C, où un ou plusieurs groupes CH₂ non adjacents peuvent être remplacés par -O-, -SiR¹₂-, -S-, -NR¹- ou -CONR¹- et où un ou plusieurs atomes de H peuvent être remplacés par F, ou un groupe aryle ou hétéroaryle comportant de 4 à 14 atomes de C, qui peut être substitué par un ou plusieurs radicaux non aromatiques R, où une pluralité de substituants R, à la fois sur le même anneau et également sur les deux anneaux différents, peuvent ensemble définir à leur tour un autre système d'anneaux monocyclique ou polycyclique aliphatique ou aromatique ;
R¹ sont, de manière identique ou différente pour chaque occurrence, H ou un radical hydrocarbone aliphatique ou aromatique comportant de 1 à 20 atomes deC;
a est 0, 1, 2, 3 ou 4 ;
b est 0, 1, 2 ou 3.

4. Composé de la formule (5), (6), (7) ou (8) 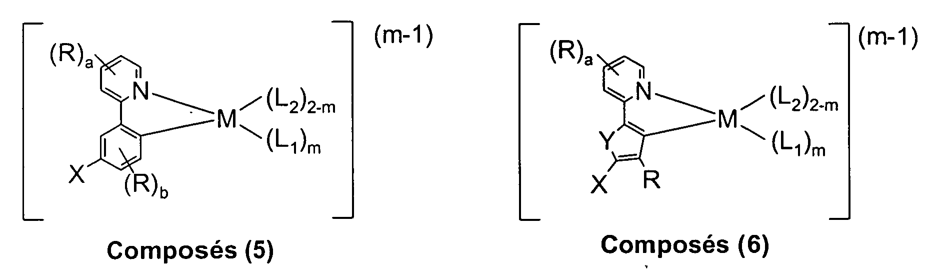 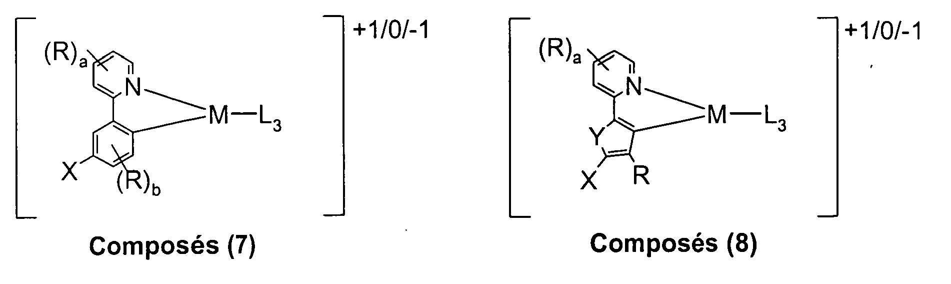 dans lesquels les symboles et les indices présentent la signification qui suit :
M représente Pd, Pt ;
X représente Cl, Br, I ;
Y représente O, S, Se, NR¹ ;
R est, de manière identique ou différente pour chaque occurrence, H, F, Cl, Br, I, NO₂, CN, un groupe alkyle ou alcoxy en chaîne droite ou ramifié ou cyclique comportant de 1 à 20 atomes de C, où un ou plusieurs groupes CH₂ non adjacents peuvent être remplacés par -O-, -SiR¹₂-, -S-, -NR¹- ou -CONR¹- et où un ou plusieurs atomes de H peuvent être remplacés par F, ou un groupe aryle ou hétéroaryle comportant de 4 à 14 atomes de C, qui peut être substitué par un ou plusieurs radicaux non aromatiques R, où une pluralité de substituants R, à la fois sur le même anneau et également sur les deux anneaux différents, peuvent ensemble définir à leur tour un autre système d'anneaux monocyclique ou polycyclique aliphatique ou aromatique ;
R¹ sont, de manière identique ou différente pour chaque occurrence, H ou un radical hydrocarbone aliphatique ou aromatique comportant de 1 à 20 atomes deC;
L₁ est un ligand monodenté neutre ;
L₂ est un ligand monodenté monoanionique ;
L₃ est un ligand bidenté neutre ou mono- ou dianionique ;
a est 0, 1, 2, 3 ou 4 ;
b est 0, 1,2 ou 3 ;
m est 0, 1 ou 2.

5. Composés selon la revendication 4, **caractérisés en ce que** L₁ représente monoxyde de carbone, isonitrile, en particulier tert-butylisonitrile, cyclohexylisonitrile, adamantylisonitrile, un amine, en particulier triméthylamine, triéthylamine, morpholine, des phosphines aliphatiques, aromatiques ou hétéroaromatiques, en particulier triméthylphosphine, tricyclohexylphosphine, dicyclohexylphénylphosphine, tri-o-tolylphosphine, tri-*tert*-butylphosphine, triphénylphosphine, tris(pentafluorophényl)phosphine ou trifluorophosphine, des phosphites, en particulier triméthyl phosphite, triéthyl phosphite, des arsines, en particulier trifluoroarsine, triméthylarsine, tricyclohexylarsine, tri-*tert*-butylarsine, triphénylarsine, tris(pentafluorophényl)arsine, des stibines, in particulier trifluorostibine, triméthylstibine, tricyclohexylstibine, tri-tert-butylstibine, triphénylstibine, tris(pentafluorophényl)stibine ou un hétérocycle contenant de l'azote, en particulier pyridine, pyridazine, pyrazine, triazine.

6. Composés selon la revendication 4, **caractérisés en ce que** L₂ est un halogénure, en particulier F, Cl, Br, I, ou cyanure, cyanate, isocyanate, thiocyanate, isothiocyanate, un alcoxy, en particulier méthoxyde, éthoxyde, propoxyde, isopropoxyde, *tert*-butoxyde, phénoxyde, un thioalcoxyde, en particulier méthanethiolate, éthanethiolate, propanethiolate, isopropanethiolate, *tert*-thiobutylate, thiophénolate, un amide, en particulier diméthylamide, diéthylamide, diisopropylamide, un carboxylate, en particulier acétate, trifluoroacétate, propionate, benzoate ou un hétérocycle anionique contenant de l'azote, en particulier morpholide, pyrrolide, imidazolide, pyrazolide.

7. Composés selon la revendication 4, **caractérisés en ce que** L₃ est un diamine, en particulier éthylènediamine, N,N,N',N'-tétraméthyléthylènediamine, propylènediamine, N,N,N',N'-tétraméthylpropylènediamine, cis-, trans-diaminocyclohexane, cis-, trans-N,N,N',N'-tétraméthyldiaminocyclohexane, des imines, en particulier 2[(1-(phénylimino-éthyl]pyridine, 2[(1-(2-méthylphénylimino)éthyl]pyridine, 2[(1-(2,6-diisopropylphénylimino)-éthyl]pyridine, 2[(1-(méthylimino)éthyl]pyridine, 2[(1-(éthylimino)éthyl]pyridine, 2[(1-(isopropylimino)éthyl]pyridine, 2[(1-(*tert*-butylimino)éthyl]pyridine, diimines, en particulier 1,2-bis-(méthylimino)éthane, 1,2-bis(éthylimino)éthane, 1,2-bis(isopropylimino)éthane, 1,2-bis(*tert-*butylimino)éthane, 2,3-bis(méthylimino)butane, 2,3-bis(éthylimino)butane, 2,3-bis-(isopropylimino)butane, 2,3-bis(*tert*-butylimino)butane, 1,2-bis(phénylimino)éthane, 1,2-bis-(2-méthylphénylimino)éthane, 1,2-bis(2,6-diisopropylphénylimino)éthane, 1,2-bis(2,6-di-*tert-*butylphénylimino)éthane, 2,3-bis(phénylimino)butane, 2,3-bis(2-méthylphénylimino)butane, 2,3-bis(2,6-diisopropylphénylimino)butane, 2,3-bis(2,6-di-*tert*-butylphénylimino)butane, des hétérocycles contenant deux atomes d'azote, en particulier 2,2'-bipyridine, o-phénanthroline, des diphosphines, en particulier bis-diphénylphosphinométhane, bis-diphénylphosphinoéthane, bis(diphénylphosphino)propane, bis(diméthylphosphino)méthane, bis(diméthylphosphino)éthane, bis(diméthylphosphino)propane, bis(diéthylphosphino)-méthane, bis(diéthylphosphino)éthane, bis(diéthylphosphino)propane, bis(di-*tert*-butylphosphino)méthane, bis(di-*tert*-butylphosphino)éthane, bis(*tert*-butylphosphino)propane, des 1,3-dicétonates dérivés de 1,3-dicétones, en particulier acétylacétone, benzoylacétone, 1,5-diphénylacétylacétone, dibenzoylméthane, bis(1,1,1-trifluoroacétyl)méthane, des 3-cétonates dérivés de 3-cétoesters, en particulier acétoacétate d'éthyle, des carboxylates dérivés d'acides aminocarboxyliques, en particulier acide pyridine-2-carboxylique, acide quinoline-2-carboxylique, glycine, diméthylglycine, alanine, diméthylaminoalanine, des salicyliminates dérivés de salicylimines, en particulier méthylsalicylimine, éthylsalicylimine, phénylsalicylimine, des dialcoolates dérivés de dialcools, en particulier éthylène glycol, 1,3-propylène glycol, des dithiolates dérivés de dithiols, en particulier 1,2-éthylènedithiol, 1,3-propylènedithiol, des hétéroarylborates, en particulier tétrakis(1-imidazolyl)borate, tétrakis(1-pyrazolyl)borate.

8. Procédé pour la préparation des composés définis selon la revendication 1, par réaction des composés (9) ou (10) 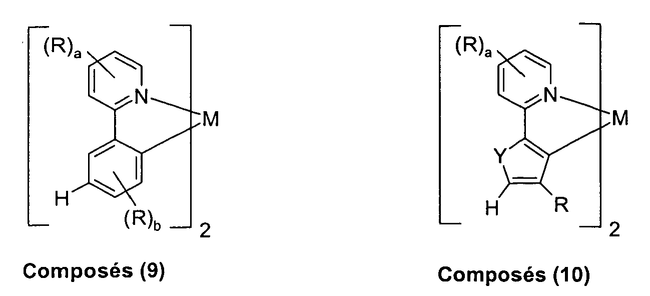 où M et les radicaux et indices Y, R, R¹, a et b présentent les significations mentionnées selon la revendication 1, avec des agents d'halogénation et une réduction qui suit.

9. Procédé pour la préparation des composés définis selon la revendication 3, par réaction des composés (11) ou (12) 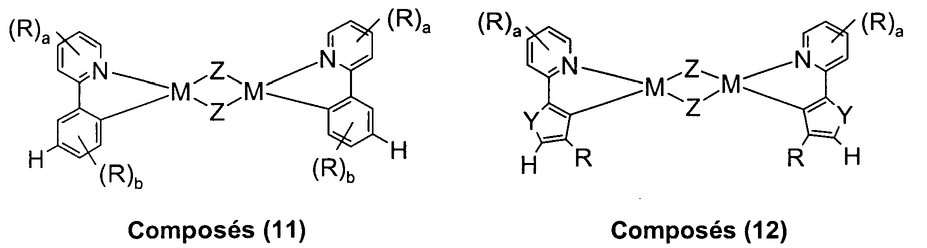 où M et les radicaux et indices Z, Y, R, R¹, a et b présentent les significations mentionnées selon la revendication 3, avec des agents d'halogénation et une réduction qui suit.

10. Procédé pour la préparation des composés définis selon la revendication 4, par réaction des composés (13), (14), (15) ou (16) 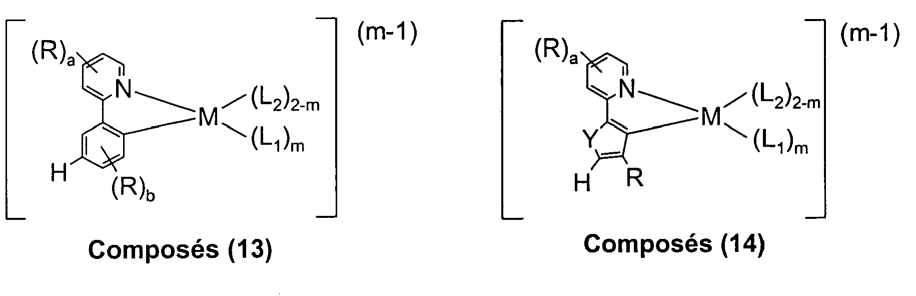 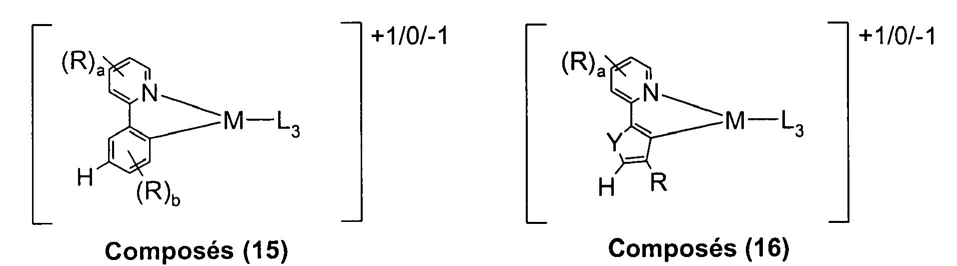 où M et les radicaux et indices L₁, L₂, L₃, Y, R, R¹, a, b et m présentent les significations mentionnées ci-avant, avec des agents d'halogénation et une réduction qui suit.

11. Procédé selon une ou plusieurs des revendications 8 à 10, **caractérisé en ce que** l'agent d'halogénation utilisé est un halogène X₂ ou un interhalogène X-X et une base selon le rapport molaire 1:1 à 1:100 ou un complexe de brome organique tel que perbromure de pyridinium, et dans chaque cas en option un acide de Lewis selon le rapport molaire (halogène sur acide de Lewis) 1:0,1 à 1:0,0001.

12. Procédé selon une ou plusieurs des revendications 8 à 10, **caractérisé en ce que** l'agent d'halogénation utilisé est un composé N-Hal organique.

13. Procédé selon une ou plusieurs des revendications 8 à 10, **caractérisé en ce que** l'agent d'halogénation utilisé est des composés O-Hal organiques et des halogènes X₂ selon le rapport molaire 0,5:1 à 1:1.

14. Procédé selon une ou plusieurs des revendications 8 à 10, **caractérisé en ce qu'**un rapport stoechiométrique des agents d'halogénation selon les revendications 11 à 13 - sur la base de la teneur en halogène actif - sur les composés (9), (10), (11), (12), (13), (14), (15) ou (16) de 2:1 est utilisé.

15. Procédé selon une ou plusieurs des revendications 8 à 10, **caractérisé en ce qu'**un rapport stoechiométrique des agents d'halogénation selon les revendications 11 à 13 - sur la base de la teneur en halogène actif - sur les composés (9), (10), (11), (12), (13), (14), (15) ou (16) de 3:1 à 1000:1 est utilisé.

16. Procédé selon une ou plusieurs des revendications 8 à 15, **caractérisé en ce qu'**un agent de réduction est ajouté au mélange de réaction selon le rapport molaire de 1:1 à 10000:1, sur la base des composés (9), (10), (11), (12), (13), (14), (15) ou (16), et l'ajout est mise en oeuvre en même temps que ou après l'ajout des agents d'halogénation (I), (II) ou (III).

17. Procédé selon une ou plusieurs des revendications 8 à 16, **caractérisé en ce que** les agents de réduction utilisés sont hydrazine (hydrate) ou leurs sels, hydroxylamine ou leurs sels, acide hydroxylamine-O-sulfonique et des hydroquinones, des sulfites de métal alcalin et alcalino-terreux, des dithionites de métal alcalin et alcalino-terreux, des métaux alcalins et alcalino-terreux et des amalgames afférents ainsi que d'autres alliages correspondants, des métaux de transition tels que manganèse, fer, nickel et zinc, et des alliages de métal de transition.

18. Procédé selon une ou plusieurs des revendications 8 à 15, **caractérisé en ce que** la réduction est également mise en oeuvre au moyen d'un chauffage sec des composés de palladium(IV) ou platine(VI) qui sont formés en tant que produits intermédiaires et qui sont isolés en tant que tels, sous pression réduite.

19. Composés selon une ou plusieurs des revendications 1 à 4, **caractérisés en ce que** leur pureté (déterminé par 1 H-RMN ou CLHP) est supérieure à 99%.

20. Polymères conjugués, partiellement conjugués ou non conjugués comprenant un ou plusieurs composés de la formule (1') et/ou (2') 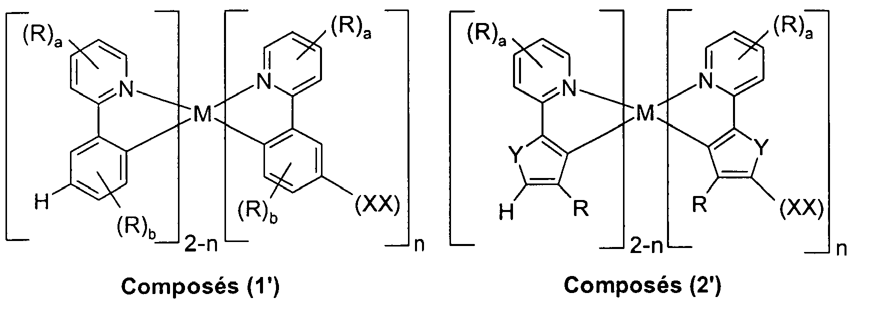 et/ou de la formule (1a') et/ou (2a') 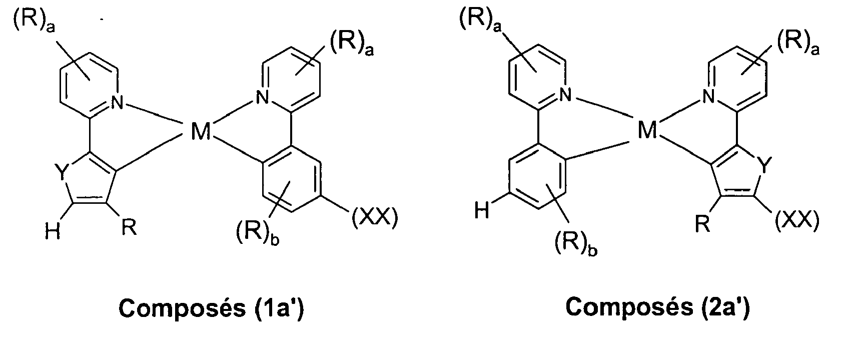 et/ou de la formule (3'), (4'), (5'), (6'), (7') et/ou (8') 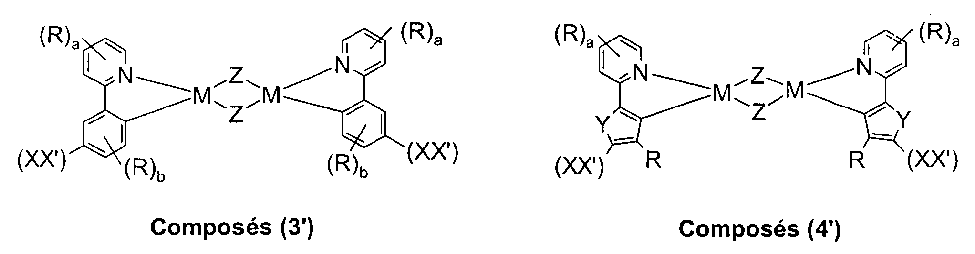 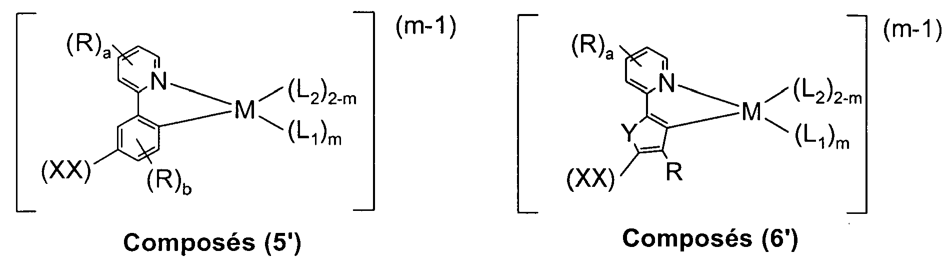 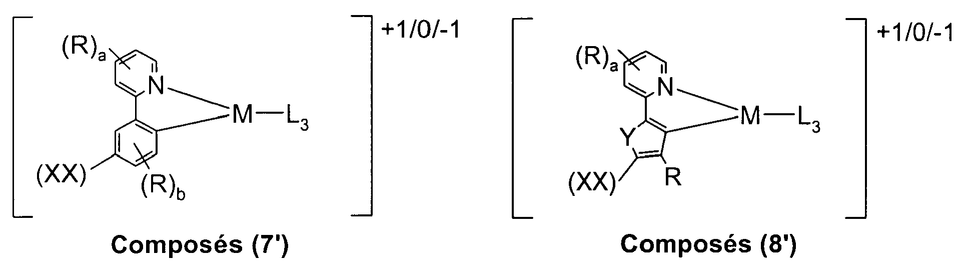 dans lesquelles les symboles et indices présentent la signification qui suit :
M représente Pd, Pt ;
X représente O, S, Se, NR¹ ;
R est, de manière identique ou différente pour chaque occurrence, H, F, Cl, Br, I, NO₂, CN, un groupe alkyle ou alcoxy en chaîne droite ou ramifié ou cyclique comportant de 1 à 20 atomes de C, où un ou plusieurs groupes CH₂ non adjacents peuvent être remplacés par -O-, -SiR¹₂-, -S-, -NR¹- ou -CONR¹- et où un ou plusieurs atomes de H peuvent être remplacés par F, ou un groupe aryle ou hétéroaryle comportant de 4 à 14 atomes de C, qui peut être substitué par un ou plusieurs radicaux non aromatiques R, où une pluralité de substituants R, à la fois sur le même anneau et également sur les deux anneaux différents, peuvent ensemble définir à leur tour un autre système d'anneaux monocyclique ou polycyclique aliphatique ou aromatique ;
R¹ sont, de manière identique ou différente pour chaque occurrence, H ou un radical hydrocarbone aliphatique ou aromatique comportant de 1 à 20 atomes de C;
L₁ est un ligand monodenté neutre ;
L₂ est un ligand monodenté monoanionique ;
L₃ est un ligand bidenté neutre ou mono- ou dianionique ;
a est 0, 1, 2, 3 ou 4 ;
b est 0, 1, 2 ou 3 ;
m est 0, 1 ou 2 ;
n est 1 ou 2 ;
(XX) représente une liaison sur le polymère conjugué, partiellement conjugué ou non conjugué ;
(XX') représente H ou une liaison sur le polymère conjugué, partiellement conjugué ou non conjugué, mais au moins un (XX') par formule représente une liaison sur le polymère conjugué, partiellement conjugué ou non conjugué.

21. Polymères selon la revendication 20, **caractérisés en ce qu'**ils ont été obtenus en utilisant un ou plusieurs composés de la formule (1), (1a), (2), (2a) et/ou (3) à (8) définis selon les revendications 1 à 4.

22. Polymères selon les revendications 20 et/ou 21, **caractérisés en ce que** le polymère comprend des unités récurrentes prises parmi des polyfluorènes, des polyspirobifluorènes, des poly-para-phénylènes, des poly-carbazoles ou des polythiophènes.

23. Polymères selon une ou plusieurs des revendications 20 à 22, **caractérisés en ce que** le polymère est un homo- ou copolymère.

24. Polymères selon une ou plusieurs des revendications 20 à 23, **caractérisés en ce que** le polymère est soluble dans des solvants organiques.

25. Composant électronique comprenant au moins un composé selon une ou plusieurs des revendications 1 à 4.

26. Composant électronique comprenant au moins un polymère selon une ou plusieurs des revendications 20 à 24.

27. Composant électronique selon la revendication 25 et/ou la revendication 26, **caractérisé en ce qu'**il s'agit de diodes émettrices de lumière organiques ou polymériques (DELOs ou DELPs), de circuits intégrés organiques (Cl-Os), de transistors à effet de champ organiques (FETOs), de transistors à film mince organiques (TFMOs), de cellules solaires organiques (CS-Os) ou de diodes laser organiques (lasers-O).
